(19) Europäisches Patentamt
European Patent Office
Office européen des brevets

(11) **EP 3 015 510 A1**

(12) **EUROPEAN PATENT APPLICATION**
published in accordance with Art. 153(4) EPC

(43) Date of publication:
04.05.2016 Bulletin 2016/18

(51) Int Cl.:
*C08L 101/00* (2006.01)  *C08J 3/22* (2006.01)
*C08K 7/04* (2006.01)  *C08L 9/00* (2006.01)
*C08L 91/06* (2006.01)

(21) Application number: 14818071.4

(22) Date of filing: 23.06.2014

(86) International application number:
PCT/JP2014/003349

(87) International publication number:
WO 2014/208071 (31.12.2014 Gazette 2014/53)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.06.2013 JP 2013136544
31.10.2013 JP 2013226262

(71) Applicant: Mitsui Chemicals, Inc.
Tokyo 105-7117 (JP)

(72) Inventors:
• KANAYA, Hirotaka
  Sodegaura-shi
  Chiba 299-0265 (JP)
• KAWABE, Kuniaki
  Sodegaura-shi
  Chiba 299-0265 (JP)
• TANAKA, Masakazu
  Sodegaura-shi
  Chiba 299-0265 (JP)

(74) Representative: Hoffmann Eitle
Patent- und Rechtsanwälte PartmbB
Arabellastraße 30
81925 München (DE)

(54) **MOLDING RESIN COMPOSITION**

(57) Problem to be solved by the present invention is to provide a molding resin composition containing an inorganic reinforcing material which enables a molded body having excellent impact resistance, high surface glossiness, and good mold releasability. This problem is solved by a molding resin composition comprising: 94 to 49 parts by weight of at least one resin (A) selected from a thermoplastic resin and a thermosetting resin; 5 to 50 parts by weight of an inorganic reinforcing material (B); 1 to 46 parts by weight of a functional group-containing olefin polymer (C) containing a component having a Tg of -140 °C to 0 °C (total of the components (A), (B) and (C) being 100 parts by weight), and 0.01 to 10 parts by weight of an olefin wax (D) having an oxygen- or nitrogen-containing group, the weight ratio C/D of component C to component D being 0.1 to 30.

FIG. 1

**Description**

Technical Field

The present invention relates to a molding resin composition containing an inorganic reinforcing material.

Background Art

Since thermoplastic resins or thermosetting resins, such as polycarbonate resins, thermoplastic polyester resins, ABS resins, polyacetal resins, polyamide resins, polyphenylene oxide resins, polyimide resins, epoxy resins, thermosetting unsaturated polyester resins, and phenol resins, have a high melting or softening point in addition to excellent mechanical properties, these resins are widely used in various industrial fields such as the automobile industry or the electrical and electronic industries.

Inorganic reinforcing materials such as glass fiber and carbon fiber have been blended with thermoplastic resins or thermosetting resins in order to increase the rigidity and heat resistance thereof. However, there is a problem in that a thermoplastic resin composition or a thermosetting resin composition blended with an inorganic reinforcing material loses high impact resistance which is a characteristic of thermoplastic resins and thermosetting resins.

In order to solve the problem caused by blending with such inorganic reinforcing materials, blending an olefin wax having a carboxyl group and/or a derivative group thereof with a resin composition (PTLs 1 and 2) and further blending a composite rubber-type graft copolymer therewith (PTL 2) have been performed. However, even when blending these components, there are cases where a decrease in the impact resistance or defects in the surface appearance become problematic or where rigidity is insufficient. Thus, the addition of an acid-modified wax (PTL 3), the addition of a silicone-modified oil wax (PTL 4), and the addition of a resin modifying material obtained by reacting a polyolefin having a functional group which reacts with a carbodiimide group, with a carbodiimide group-containing compound (PTLs 5 and 6) have been proposed.

The demand for polycarbonate resins increases year by year and further growth is also expected. In particular, polycarbonate compounds are needed in countries all over the world due to the rapid growth of the markets for laptop personal computers and smart phones. Among these, there is a demand for thinner members or metal substitutes for metals for the purpose of solving environmental problems and of cost reduction. Glass filler blending is used to achieve high strength for realizing these demands; however, this markedly decreases the strength of the polycarbonate compound against an impact.

Citation List

Patent Literature

PTL 1
Japanese Patent Application Laid-Open No. HEI8-188708
PTL 2
Japanese Patent Application Laid-Open No. HEI7-238213
PTL 3
Japanese Examined Patent Application Publication No. SHO62-12814
PTL 4
Japanese Patent Application Laid-Open No. 2009-256655
PTL 5
PCT Japanese Patent Domestic Re-publication No. 2009-069649
PTL 6
PCT Japanese Patent Domestic Re-publication No. 2005-097840

Summary of Invention

Technical Problem

An object of the present invention is to provide a molding resin composition containing an inorganic reinforcing material which enables a molded body having excellent impact resistance, high surface glossiness, and good releasability from a mold.

Solution to Problem

A first aspect of the present invention relates to the molding resin composition described below.

[1] A molding resin composition containing 94 parts by weight to 49 parts by weight of at least one resin (A) selected from the group consisting of a thermoplastic resin and a thermosetting resin, 5 parts by weight to 50 parts by weight of an inorganic reinforcing material (B), 1 part by weight to 46 parts by weight of a functional group-containing olefin polymer (C) which has a glass transition temperature Tg of -140°C to 0°C, and 0.01 parts by weight to 10 parts by weight of an olefin wax (D) which has a group containing an element selected from oxygen and nitrogen (where a total of the component (A), the component (B), and the component (C) is 100 parts by weight), in which the weight ratio C/D of component (C) to component (D) is 0.1 to 30.

[2] The molding resin composition according to [1], in which the resin (A) is a thermoplastic resin which has a melting point of 200°C or higher and contains an element of groups 15 to 17, a carbon element, and a hydrogen element.

[3] The molding resin composition according to [1] or [2], in which the resin (A) contains a thermoplastic resin selected from the group consisting of a polycarbonate resin, a thermoplastic polyester resin, a polyacetal resin, a polyamide resin, a polyphenylene oxide resin, and a polyimide resin, or a thermosetting resin selected from the group consisting of an epoxy resin, a thermosetting unsaturated polyester resin, and a phenol resin.

[4] The molding resin composition according to [1], in which the inorganic reinforcing material (B) is at least one material selected from a glass fiber and a carbon fiber.

[5] The molding resin composition according to [1], in which the functional group-containing olefin polymer (C) is a copolymer which contains a unit derived from a diene compound and one or more units selected from a unit derived from an aromatic vinyl compound, a unit derived from a cyanated vinyl compound, and a unit derived from an $\alpha,\beta$-unsaturated carboxylate.

[6] The molding resin composition according to [5], in which the unit derived from a diene compound is a unit derived from butadiene and the unit derived from an aromatic vinyl compound is a unit derived from styrene.

[7] The molding resin composition according to [1], in which the olefin wax (D) is an olefin wax which is obtained by introducing a substituent group having an element selected from oxygen and nitrogen into an unmodified olefin wax (d) and the unmodified olefin wax (d) satisfies the following (i) to (iv):

(i) a density is 870 kg/m$^3$ to 980 kg/m$^3$, (ii) a melting point is 65°C to 165°C, (iii) a number-average molecular weight (Mn) is 400 to 10,000, and (iv) a ratio (Mw/Mn) of a weight average-molecular weight (Mw) to the number-average molecular weight (Mn) is 1.5 to 5.5.

A second aspect of the present invention relates to a method for producing a molding resin composition given below.

[8] A method for producing the molding resin composition according to any one of [1] to [7], including preparing a masterbatch which includes the functional group-containing olefin polymer (C) and the olefin wax (D), and melt-kneading the masterbatch, the resin (A), and the inorganic reinforcing material (B).

[9] The method for producing the molding resin composition according to [8], in which a difference between a 5% thermal reduction temperature of the masterbatch according to thermogravimetry and differential thermal analysis (TG-DTA) and the 5% thermal reduction temperature of the functional group-containing olefin polymer (C) or the olefin wax (D) is 20°C or higher.

A third aspect of the present invention relates to a molded body shown below.

[10] A molded body made of the molding resin composition according to any one of [1] to [7].

Advantageous Effects of Invention

A molded body which is obtained from a molding resin composition of the present invention has high impact resistance and high surface glossiness. In addition, the releasability is good when detaching the molded body from a mold.

Brief Description of Drawings

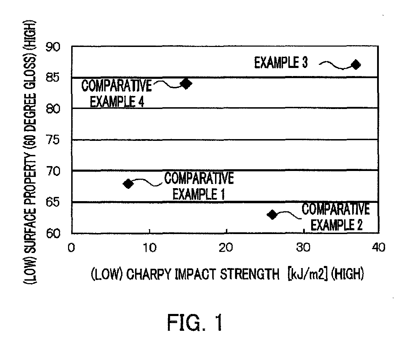

FIG 1 is a graph showing a relationship between a composition of a molding resin composition, and surface gloss of a molded body and impact resistance of the molded body.

Description of Embodiments

1. Molding Resin Composition

A molding resin composition of the present invention contains a resin (A), an inorganic reinforcing material (B), a functional group-containing olefin polymer (C), and a modified olefin wax (D).

1-1. Resin (A)

The resin (A) which is contained in the molding resin composition of the present invention is at least one resin selected from the group consisting of a thermoplastic resin and a thermosetting resin. Examples of the resin (A) include thermoplastic resins selected from the group consisting of polycarbonate resins, thermoplastic polyester resins, polyacetal resins, polyamide resins, polyphenylene oxide resins, and polyimide resins and thermosetting resins selected from the group consisting of epoxy resins, thermosetting unsaturated polyester resins, and phenol resins.

The resin (A) may be one individual type of the thermoplastic resin and the thermosetting resin, or may be a combination of two or more types.

The definition and the method for producing a thermoplastic resin or thermosetting resin are known in the art and are, for example, described in publications such as "Jitsuyo Purasuchikku Jiten" (Practical Plastic Encyclopedia, Editorial Committee Ed., published by Sangyochosakai Corp.).

The resins (1) to (6) below are examples of thermoplastic resins which may be the resin (A).

(1) Polycarbonate Resin

Typically, a polycarbonate resin is a resin which is obtained by reacting an aromatic diol (for example, bisphenol A) and phosgene; however, polydiethylene glycol bisphenyl carbonate is preferable in the present invention. The polycarbonate resins are commercially available and examples thereof include NOVAREX (Mitsubishi Chemical Corp.), Panlite (Teijin Ltd.), Lexan (Saudi Basic Industries Corp.) and the like, which can be advantageously used in the present invention.

(2) Thermoplastic Polyester Resin

Typically, a thermoplastic polyester resin is a resin which is obtained by polycondensation of a dicarboxylic acid and a diol. In the present invention, polyethylene terephthalate, polybutylene terephthalate, polyethylene 2,6-naphthalene carboxylate, polycyclo hexane terephthalate, and the like are advantageously used as a thermoplastic polyester resin. The thermoplastic polyester resins are commercially available and Rynite (Du Pont Japan Ltd.) and the like can be advantageously used in the present invention.

(3) Polyacetal Resin

Typically, a polyacetal resin is a resin which is obtained by ring-opening polymerization of formalin or trioxane along with ethylene oxide as desired in the presence of a cation catalyst and is a resin which has a polyoxymethylene chain as a main skeleton. A copolymer type is advantageously used in the present invention. Polyacetal resins are commercially available and Upital (Mitsubishi Engineering-Plastics Corp.) and the like can be advantageously used in the present invention.

(4) Polyamide Resin

Typically, a polyamide resin is a resin which is obtained by polycondensation of a diamine and a dicarboxylic acid, ring-opening polymerization of caprolactam, or the like. In the present embodiment, a polycondensation product of an aliphatic diamine and an aliphatic or aromatic dicarboxylic acid is preferable. The polyamide resins are commercially available and Leona (Asahi Kasei Chemicals Corp.), Zytel (Du Pont Japan Ltd.), and the like can be advantageously used in the present invention.

(5) Polyphenylene Oxide Resin

Typically, a polyphenylene oxide resin is a resin which is obtained by oxidative coupling of 2,6-dimethylphenol in the presence of a copper catalyst; however, in the present invention, it is also possible to use a modified polyphenylene oxide resin which is modified by blending another resin or the like with the resin. A blended product of a styrene-based polymer is preferable in the present invention. Polyphenylene oxide resins are commercially available and Zylon (Asahi Kasei Chemicals Corp.), Iupiace (Mitsubishi Engineering-Plastics Corp.), and the like can be advantageously used in the present invention.

(6) Polyimide Resin

Typically, a polyimide resin is a resin which is obtained by polycondensation of a tetracarboxylic acid and a diamine and generation of an imide bond in the main skeleton. In the present invention, a polyimide resin formed using pyromellitic dianhydride and diamino diphenyl ether is preferable. Polyimide resins are commercially available and Vespel (Du Pont Japan Ltd.) and the like can be advantageously used in the present invention.

The resins (7) to (9) below are examples of a thermosetting resin which may be the resin (A). The description below describes a thermosetting resin before thermosetting.

(7) Epoxy Resin

Typically, an epoxy resin is a resin which is obtained by reacting an aromatic diol (for example, bisphenol A) and epichlorohydrin in the presence of an alkali. A bisphenol A type epoxy resin which is a 170 to 5,000 epoxy equivalent, a bisphenol F type epoxy resin, and a bisphenol S type epoxy resin are preferable in the present invention. The epoxy resins are commercially available and Epomic (Mitsui Chemicals, Inc.), Epiclon (DIC Corp.), Sumiepoxy (Sumitomo Chemical Co., Ltd.), and the like can be advantageously used in the present invention.

(8) Thermosetting Unsaturated Polyester Resin

Typically, a thermosetting unsaturated polyester resin is a resin which is obtained by esterification reaction of an aliphatic unsaturated dicarboxylic acid and an aliphatic diol. A polyester resin which is obtained by esterification reaction of an unsaturated dicarboxylic acid such as maleic acid or fumaric acid and a diol such as ethylene glycol or diethylene glycol is preferable in the present invention. Thermosetting unsaturated polyester resins are commercially available and Rigolac (Showa Denko K.K.), Sumicon (Sumitomo Bakelite Co., Ltd.), and the like can be advantageously used in the present invention.

(9) Phenol Resin

The phenol resin in the present invention encompasses any phenol resins of a so-called novolac type or resol type; however, in the present invention, the phenol resin is preferably a novolac type which is cured by hexamethylene tetramine or a solid resol composed mainly of a dimethylene ether bonds. The phenol resins are commercially available and Sumicon PM (Sumitomo Bakelite Co., Ltd.), Nikkaline (The Nippon Synthetic Chemical Industry Co., Ltd.), and the like can be advantageously used in the present invention.

Here, the resin (A) is preferably a thermoplastic resin having a melting point (Tm) of 200°C or higher. The melting point (Tm) of the resin (A) is preferably 205°C or higher, and more preferably 210°C or higher. The melting point (Tm) of the resin (A) is preferably 500°C or lower, more preferably 400°C or lower, and particularly preferably 350°C or lower. The melting point (Tm) of the resin (A) is measured using differential scanning calorimetry (DSC). In detail, after filling an aluminum pan with approximately 10 mg of a sample, the temperature is raised to temporarily melt the sample, and the sample is cooled to 30°C at 10°C/min. An endothermic peak of the cooled sample measured by increasing the temperature at 10°C/min is set as the melting point for the sample. In addition, in a case of a highly heat resistant resin where thermal decomposition occurs prior to the measuring of the melting point (Tm), the temperature at which thermal decomposition occurs is defined as the melting point (Tm).

The resin (A) for which the melting point (Tm) is 200°C or higher may be a thermoplastic resin which contains an element of groups 15 to 17, carbon element and a hydrogen element. The element of groups 15 to 17 may be, for example, oxygen or nitrogen. In more detail, the thermoplastic resin which includes an element of groups 15 to 17, a carbon element, and a hydrogen element may be a polycarbonate resin, a thermoplastic polyester resin, a polyamide resin, and the like. Examples of specific commercial products thereof include Amilan CM1041 LO (Toray Industries, Inc.: polyamide resin, melting point 225°C), Novaduran 5020 (Mitsubishi Engineering-Plastics Corp.: polybutylene terephthalate resin, melting point 224°C), and the like.

The reason why the melting point (Tm) of the resin (A) is preferably 200°C or higher is that impact resistance, surface glossiness, and mold releasability are exhibited in a well-balanced manner when the resin (A) is combined with an olefin polymer (C) and an olefin wax (D) which will be described below. Normally, for molding a composition which includes a high melting point resin, the molding temperature is likely to be set at a high temperature. For this reason, a releasing agent with low molecular weight is easily scattered during molding and it is difficult to obtain favorable mold releasability. In addition, since the mold releasability of a high melting point resin composition is poor, the surface glossiness of the molded body also easily deteriorates. Furthermore, there are also cases where the surface glossiness of the molded body is deteriorated by the inorganic reinforcing material (B) also being entrained on the molded body surface at the same time as the releasing agent with low molecular weight is displaced to the molded body surface during molding. In addition, due to the modifying agent scattering or bleeding out during molding, it is difficult to obtain sufficient modifying effects matching the added amount.

When the functional group-containing olefin polymer (C) having specific properties and the olefin wax (D) are used together when molding the resin (A) with a high melting point, it is possible to solve the problems described above. The solving mechanism is not limited; however, it is assumed that bleeding out of the olefin wax (D) during molding is suppressed as a result of appropriately selecting the olefin polymer (C) and the olefin wax (D) for improved affinity between them and that the modifying effect according to the olefin wax (D) is dramatically improved as a result of the affinity of the inorganic reinforcing material (B) for the olefin wax (D) being improved via the olefin-based polymer (C).

The resin (A) preferably includes a polycarbonate resin, a polyamide resin, and a thermoplastic polyester resin, and more preferably includes a polycarbonate resin. The reason why a polycarbonate resin, a polyamide resin, and a thermoplastic polyester resin are preferable as the resin (A) is that the compatibility of a carbonyl group or an aromatic skeleton of the resin (A) and the olefin wax (D) is generally poor and both may be detached from the interface when an impact is applied to the resin molded body. As a counter to this, the olefin wax (D) effectively acts as an impact modifying material in the present invention and the impact resistance of the molded body is increased.

The content of the resin (A) is 94 parts by weight to 49 parts by weight per 100 parts by weight of the total of the resin (A), the inorganic reinforcing material (B), and the olefin polymer (C), preferably 90 parts by weight to 55 parts by weight, more preferably 85 parts by weight to 58 parts by weight, and particularly preferably 80 parts by weight to 60 parts by weight. When the content of the resin (A) is within the range described above, it is possible to obtain an inorganic reinforcing material molding resin composition which has an excellent balance between mechanical properties and surface glossiness.

1-2. Inorganic Reinforcing Material (B)

An inorganic reinforcing material (B) which is contained in the molding resin composition of the present invention refers to at least one material selected from a glass fiber, a carbon fiber, and a filler. It is also possible to use these inorganic reinforcing materials (B) singly or in combination.

The type of the glass fiber is not particularly limited and it is possible to use roving glass, chopped strand glass, milled glass, and the like. In addition, these glass fibers may be used singly or in combination.

The length (L) of the glass fiber is not particularly limited, but is preferably 0.3 mm to 10 mm, more preferably 2 mm to 7 mm, and even more preferably 2 mm to 5 mm from the viewpoint of workability. However, the glass fiber may break during the extrusion molding for preparing the resin composition. The diameter of the glass fiber is also not particularly limited and the average fiber diameter (D) is 1 $\mu$m to 25 $\mu$m, preferably 5 $\mu$m to 17 $\mu$m.

The aspect ratio of the glass fiber (average fiber length/average fiber diameter=L/D) is in the range of 1 to 100, preferably 5 to 70, and even more preferably 50 or less; however, glass fibers may be used which have different aspect ratios and mixed at an appropriate ratio. When the aspect ratio is within the range described above, it is possible to obtain an inorganic reinforcing material molding resin composition which has an excellent balance between the surface glossiness and the mechanical properties. The cross-sectional shape of the glass fiber is also not particularly limited and may be any of a circular shape, a cocoon shape, a gourd shape, an oval shape, or the like. It is possible to examine the length of the glass fiber by melting and filtering the molded product and observing only the fiber.

Surface treatment may be carried out on the glass fiber. Surface treatment is performed by treatment with a silane coupling agent, a titanate coupling agent, an aluminate coupling agent, or the like. Examples of silane coupling agents include vinyltrichlorosilane, vinyltriethoxysilane, vinyltrimethoxysilane, $\gamma$-methacryloxypropyltrimethoxysilane, P-(3,4-epoxycyclohexyl) ethyltrimethoxysilane, $\gamma$-glycidoxypropyltrimethoxysilane, N-$\beta$-(amino ethyl)-$\gamma$-ammopropyltri-methoxysilane, $\gamma$-aminopropyltriethoxysilane, N-phenyl-$\gamma$-aminopropyltrimethoxysilane, $\gamma$-mercaptopropyltrimethoxysi-lane, $\gamma$-chloropropyltrimethoxysilane, and the like.

Bundling treatment may be carried out on the glass fiber using an olefin-based resin, a styrene-based resin, an acryl-based resin, a polyester-based resin, an epoxy-based resin, a urethane-based resin, and the like. The olefin resin or the urethane-based resin used for the bundling treatment is used to an extent which does not influence the properties of the molding composition. Furthermore, the glass fiber may be coated with a metal such as nickel, copper, cobalt, silver, aluminum, and iron, or an alloy thereof, by plating, vapor deposition, or the like.

The shape and type of the carbon fiber are not particularly limited, but the shape may be a chopped strand, a roving strand, a milled fiber, and the like and the type may be any of pitch type or polyacrylonitrile type.

The fiber diameter of the carbon fiber is preferably a diameter of 0.5 $\mu$m to 15 ($\mu$m, and more preferably 1 $\mu$m to 10 $\mu$m. The fiber diameter of the carbon fiber is generally 6 $\mu$m to 18 $\mu$m in most cases.

The cut length of the chopped strands of the carbon fiber is preferably 1 mm to 15 mm, more preferably 2 mm to 10 mm, and particularly preferably 3 mm to 8 mm. In addition, the chopped strands are crushed in the middle of the molding.

In the molding resin composition, the aspect ratio (L/D) which is a ratio of the length L in a fiber axis direction of the carbon fiber to the fiber diameter D is preferably in a range of 15 to 100 and more preferably in a range of 20 to 50.

The carbon fiber may be obtained by spinning or molding a raw material composition followed by carbonation. In addition, the carbon fiber may be a carbon fiber which is basically obtained by vapor deposition without going through a spinning process.

The carbon fiber obtained by vapor deposition has a small fiber diameter and a large aspect ratio (L/D). For this reason, it is possible to obtain a molded product which has a favorable surface appearance as well as high rigidity from the molding resin composition which includes the carbon fiber which is obtained by vapor deposition.

The specific surface area of the carbon fiber may be increased by performing activation treatment.

The carbon fiber is preferably fiber subjected to surface treatment using a silane coupling agent, a titanate coupling agent, an aluminate coupling agent, or the like.

Examples of a bundling agent include epoxy resins, urethane resins, olefin resins, styrene resins, polyester resins, nylon resins, and the like, with epoxy resins and urethane resins being preferable.

As a filler, an amorphous filler such as calcium carbonate, silica, kaolin, clay, titanium oxide, barium sulfate, zinc oxide, aluminum hydroxide, alumina, and magnesium hydroxide; a flat filler such as talc, mica, or glass flakes; a needle-shaped filler such as wollastonite, potassium titanate, basic magnesium sulfate, sepiolite, xonotlite, or aluminum borate; a filler such as metal powder, metal flakes, carbon black, or carbon fine particles, and the like are used. Other than these, glass beads, glass powder, and the like may be used. These fillers may be used individually or in combination, or a filler on the surface of which carbon coating, a silane coupling treatment, or the like is carried out may be used individually or in combination.

The inorganic reinforcing material (B) which is contained in the molding resin composition of the present invention preferably includes a glass fiber, a carbon fiber, and carbon fine particles, and more preferably includes a glass fiber and a carbon fiber. The inorganic reinforcing material (B) is particularly preferably a glass fiber from the viewpoint of the affinity with the olefin polymer (C) or the olefin wax (D). In addition, since the resin composition may be molded into a molded body for a wide range of uses from home products to industrial products, there are cases where it is preferable that a glass fiber which does not have conductivity (which is insulating) is the inorganic reinforcing material (B).

The resin composition of the present invention is molded into a molded body. Molding is performed, for example, by injection molding, extrusion molding, compression molding, and the like; however, injection molding is preferable from the viewpoint of the design and moldability. With regard to the resin composition of the present invention, the inorganic reinforcing material (B) in the molded body is preferably orientated through a molding process. In other words, in the molded body, the inorganic reinforcing material (B) is preferably present with anisotropy. The greater the orientation anisotropy of the inorganic reinforcing material (B) is, the higher the impact resistance of the molded body.

In the resin composition of the present invention, the olefin polymer (C) or the olefin wax (D) which will be described below is preferably attached to the inorganic reinforcing material (B). The inorganic reinforcing material (B) thereby easily moves in the resin composition and the orientation anisotropy of the inorganic reinforcing material (B) in the molded body further increases. In addition, the inorganic reinforcing material (B) does not easily protrude from the surface of the molded body. For this reason, the surface glossiness of the molded body increases and the appearance or design of the molded body is improved.

The content of the inorganic reinforcing material (B) is preferably 5 parts by weight to 50 parts by weight with respect to 100 parts by weight of the total of the resin (A), the inorganic reinforcing material (B), and the functional group-containing olefin polymer (C), more preferably 6 parts by weight to 35 parts by weight, even more preferably 7 parts by weight to 25 parts by weight, and particularly preferably 8 parts by weight to 15 parts by weight. It is not possible to sufficiently obtain an effect of improving the mechanical properties when the content is less than 5 parts by weight and the surface glossiness of the molded body deteriorates when the content is more than 50 parts by weight.

1-3. Olefin Polymer (C)

The olefin polymer (C) which is contained in the molding resin composition of the present invention has a glass transition temperature Tg in a range of -140°C to 0°C. The olefin polymer (C) which has a glass transition temperature Tg in the range of -140°C to 0°C has rubber elasticity under normal temperature conditions. The olefin polymer (C) is able to increase the impact resistance of the resin composition of the present invention containing the inorganic reinforcing material (B).

The molded body of the resin composition which contains the inorganic reinforcing material (B) has high rigidity. On the other hand, toughness is low and the molded body easily becomes fragile. In other words, the impact resistance easily becomes low. The resin composition of the present invention is able to provide a molded body with high toughness by containing the olefin polymer (C) as well as the inorganic reinforcing material (B).

The olefin polymer (C) is a polymer of an olefin monomer and preferably includes a structure unit derived from a polyene monomer. Examples of polyene monomers include a diene compound such as butadiene and isoprene. The olefin polymer (C) preferably exhibits rubber elasticity by olefin polymer chains cross-linked with each other via the structure unit derived from a polyene monomer. For example, the olefin polymer (C) may include a constituent unit derived from organosiloxane. The olefin polymer (C) preferably exhibits rubber elasticity by having the constituent unit derived from organosiloxane.

A structure unit derived from a functional group-containing olefin monomer is further included in the olefin polymer (C). Examples of the functional group include a group having an aromatic ring, and a group containing an element of groups 15 to 17. Examples thereof include an aromatic hydrocarbon group with 6 to 20 carbon atoms, a nitrile group, an ester group, a carboxyl group, a ketone group, an aldehyde group, an ether group, an amide group, an imide group, and a halogen atom, and an aromatic hydrocarbon group with 6 to 20 carbon atoms, a nitrile group, an ester group, and a carboxyl group are preferable.

The functional group in the olefin polymer (C) is preferably a group which increases the affinity of the olefin polymer (C) for the inorganic reinforcing material (B) in the molding resin composition of the present invention. In more detail, the olefin polymer (C) is preferably able to be attached to the inorganic reinforcing material (B) via the functional group and more preferably covers the inorganic reinforcing material (B).

Specific examples of the functional group-containing olefin monomer include aromatic vinyl compounds such as styrene, $\alpha$-methylstyrene, paramethylstyrene, chlorostyrene, bromine styrene, dibromine styrene, tribromine styrene, vinylnaphthalene, isopropenylnaphthalene, and divinylbenzene; vinyl cyanide compounds such as (meth)acrylonitrile; unsaturated carboxylic acids (anhydrides) such as (meth)acrylic acid and maleic acid anhydride; $\alpha,\beta$-unsaturated carboxylic acid esters such as (meth)acrylic acid alkylesters such as methyl, ethyl, propyl and butyl (meth)acrylates.

The lower limit value of the Tg of the olefin polymer (C) is -130°C or higher, preferably -120°C or higher, and more preferably -110°C or higher while the upper limit value is -20°C or below, preferably -40°C or below, and more preferably -60°C or below. When the Tg of the olefin polymer (C) is within the ranges described above, the impact resistance of the molded body of the resin composition is improved.

The lower limit value of MFR (temperature 200°C, weight 5 kg) of the olefin polymer (C) is 0.1 or more, preferably 0.3 or more, and more preferably 0.5 or more while the upper limit value is 70 or less, preferably 60 or less, and more preferably 50 or less. When the MFR of the olefin polymer (C) is within the ranges described above, the balance between the surface smoothness and the mechanical properties of the molded body of the resin composition is excellent.

The lower limit value of the density of the olefin polymer (C) which is measured by a density-gradient tube method is 900 kg/m$^3$ or more, preferably 920 kg/m$^3$ or more, and more preferably 930 kg/m$^3$ or more while the upper limit value is 1,200 kg/m$^3$ or less, preferably 1,100 kg/m$^3$ or less, and more preferably 1,050 kg/m$^3$ or less. When the density of the olefin polymer (C) is within the ranges described above, the mechanical properties and the impact resistance of the molded body of the resin composition are improved.

The olefin polymer (C) is obtained by copolymerization reaction of a polyene monomer such as a diene compound and a functional group-containing olefin monomer. The copolymerization reaction is preferably a random copolymerization reaction.

Specific examples of the olefin polymer (C) include an acrylonitrile butadiene styrene copolymer (ABS, Tg: -80°C), a methyl methacrylate butadiene styrene copolymer (MBS, Tg: -80°C), an alkyl methacrylate styrene copolymer (MS, Tg: -42°C), an alkyl methacrylate-polydimethylsiloxane styrene copolymer (Tg: -125°C), an acrylonitrile-butadiene rubber (NBR, Tg: -85°C), a styrene butadiene copolymer (SBR, Tg:-80°C), a hydrogenated styrene butadiene styrene copolymer (SEBS, Tg: -80°C), and the like. Examples of commercial products of the olefin polymer (C) include the products Styluck (Asahi Kasei Chemicals Corp.), Cycolac (UMG ABS Ltd.), Kaneace (Kaneka Corp.), Metablen (Mitsubishi Rayon Co., Ltd.), Techno ABS (Techno Polymer Co., Ltd.), UMG ABS (UMG ABS Ltd.), Santac (NIPPON A&L Inc.), and the like and, among these, an acrylonitrile butadiene styrene copolymer or a methyl methacrylate butadiene styrene copolymer can be advantageously used.

The reason why an acrylonitrile butadiene styrene copolymer or a methyl methacrylate butadiene styrene copolymer is preferable as the olefin polymer (C) is that these form a core shell structure where butadiene constitutes a core and the acrylonitrile styrene copolymer or the methyl methacrylate styrene copolymer constitutes a shell, and the acrylonitrile styrene copolymer or the methyl methacrylate styrene copolymer which constitutes the shell exhibits excellent compatibility with the resin (A) and increases the dispersibility of the butadiene component which is the core.

The content of the functional group-containing olefin polymer (C) is preferably 1 part by weight to 46 parts by weight with respect to 100 parts by weight of the total of the resin (A), the inorganic reinforcing material (B), and the functional group-containing olefin polymer (C), more preferably 2 parts by weight to 40 parts by weight, and even more preferably 3 parts by weight to 35 parts by weight. When the content is less than 1 part by weight, it is not possible to obtain a favorable surface smoothness since the surface appearance during molding is influenced and, when the content is more than 46 parts by weight, the mechanical properties are influenced.

1-4. Olefin Wax (D)

The olefin wax (D) has a "group having an element selected from oxygen and nitrogen". More typically, the olefin wax (D) is obtained by introducing a substituent group having an element selected from oxygen and nitrogen by subjecting an (unmodified) olefin wax (d) to a modification reaction with a compound having an element selected from oxygen and nitrogen.

The "group having an element selected from oxygen and nitrogen" in the olefin wax (D) is preferably a group which improves the affinity of the olefin wax (D) for the inorganic reinforcing material (B). The olefin wax (D) is thereby attached to the inorganic reinforcing material (B) and it is possible to coat the inorganic reinforcing material (B) with the olefin wax (D).

The surface appearance of the molded body of the resin composition which includes a low molecular weight polymer such as a typical olefin wax normally tends to deteriorate. However, it may be considered that the olefin wax (D) which is included in the molding resin composition of the present invention has a high affinity for the resin (A) and that interaction with the inorganic reinforcing material (B) easily occurs. In other words, it is considered that the olefin wax (D) takes a configuration for protecting the inorganic reinforcing material (B) and suppresses re-aggregation of the inorganic reinforcing material (B), thereby enabling the formation of a fine dispersion. The present inventors assume that, as a result of the above, the resin composition is more likely to take a configuration excellent in balance between surface glossiness, impact resistance, and mold releasability of the molded product.

1-4-1. Unmodified Olefin Wax (d)

Examples of the unmodified olefin wax (d) include a polyethylene wax or a polypropylene wax. The unmodified olefin wax (d) may be a low molecular weight polyolefin itself which is obtained by polymerizing an olefin, or may be a low molecular weight polyolefin which is obtained by pyrolytically decomposing a high molecular weight polyolefin obtained by polymerization to reduce the molecular weight thereof. The unmodified olefin wax (d) is particularly preferably a low molecular weight polyolefin which is obtained by polymerizing an olefin.

It is also possible to produce the low molecular weight polyolefin which is obtained by polymerizing an olefin by any method known in the art. For example, an olefin may be polymerized using a titanium-based catalyst, a vanadium-based catalyst, a metallocene-based catalyst, or the like.

The unmodified olefin wax (d) is more preferably an ethylene homopolymer or a copolymer of ethylene and an $\alpha$-olefin with 3 to 20 carbon atoms. The $\alpha$-olefin may be straight or branched and may be substituted or unsubstituted. The $\alpha$-olefin is preferably an $\alpha$-olefin with 3 to 10 carbon atoms, more preferably propylene with 3 carbon atoms, 1-butene with 4 carbon atoms, 1-pentene with 5 carbon atoms, 1-hexene or 4-methyl-1-pentene with 6 carbon atoms, 1-octene with 8 carbon atoms, and the like, and even more preferably propylene, 1-butene, 1-hexene, and 4-methyl-1-pentene. From the viewpoint of the degree of crystallinity, propylene and 1-butene are particularly preferable.

The form of the unmodified olefin wax (d) may be any form of a resin or an elastomer. As the steric structure of the polyolefin, both of isotactic structure and syndiotactic structure can be used, and the steric regularity is not particularly limited. Commercially available unmodified olefin waxes may be used as it is.

The lower limit value of the density of the unmodified olefin wax (d) which is measured by the density-gradient tube method is 870 kg/m$^3$ or more, preferably 890 kg/m$^3$ or more, and more preferably 910 kg/m$^3$ or more while the upper limit value is 980 kg/m$^3$ or less, preferably 970 kg/m$^3$ or less, and more preferably 960 kg/m$^3$ or less. When the density of the unmodified olefin wax (d) is within the ranges described above, it is possible to obtain an inorganic reinforcing material-blended molding resin composition having less tackiness on the surface and having excellent mechanical characteristics and impact resistance.

The lower limit value of the melting point of the unmodified olefin wax (d) which is measured by differential scanning calorimetry (DSC) is 65°C or higher, preferably 80°C or higher, more preferably 90°C or higher, and particularly preferably 100°C or higher while the upper limit value is 165°C or below, preferably 135°C or below, and more preferably 120°C or below. When the melting point of the unmodified olefin wax (d) is within the ranges described above, it is possible to obtain a molding resin composition having less tackiness on the surface and having excellent mechanical characteristics and impact resistance.

It is possible to obtain the weight-average molecular weight (Mw) and the number-average molecular weight (Mn) of the unmodified olefin wax (d) from GPC measurement. The number-average molecular weight (Mn) which is measured by gel permeation chromatography (GPC) is in a range of 400 to 10,000, preferably 400 to 3,000, more preferably 400 to 2,000, and particularly preferably 1,000 to 2,000. When the number-average molecular weight (Mn) of the unmodified olefin wax (d) is within the ranges described above, the handleability during modification is excellent.

The upper limit value of the ratio (Mw/Mn) of the weight-average molecular weight and the number-average molecular weight of the unmodified olefin wax (d) which are measured by GPC is 5.5 or less, preferably 3.5 or less, and more preferably 3.0 or less. In addition, the lower limit value of Mw/Mn is 1.5 or more, preferably 2.0 or more. When the ratio (Mw/Mn) of the weight-average molecular weight and the number-average molecular weight of the unmodified olefin wax (d) is within the ranges described above, there is less tackiness on the surface of the molded body of the resin composition and the mechanical characteristics or the impact resistance of the molded body is improved.

It is possible to perform the GPC measurement of the molecular weight under the conditions below. It is possible to obtain the weight-average molecular weight (Mw) and the number-average molecular weight (Mn) based on the following conversion method after creating a calibration curve using a commercially available monodispersed standard polystyrene.

Apparatus: Gel permeation chromatograph Alliance GPC 2000 type (manufactured by Waters Corp.)
Solvent: o-dichlorobenzene
Column: TSKgel GMH6-HT x2, TSKgel GMH6-HTL column x2 (both from Tosoh Corp.)
Flow rate: 1.0 ml/min
Sample: 0.15 mg/mL o-dichlorobenzen solution
Temperature: 140°C
Molecular weight conversion: in terms of PE/general calibration method

A coefficient of the Mark-Houwink viscosity equation was used for the calculation of the general calibration. The values described in the document (J. Polym. Sci., Part A-2, 8, 1803 (1970), Makromol. Chem., 177, 213 (1976)) were used as the Mark-Houwink coefficients for PS and PE.

The penetration hardness of the unmodified olefin wax (d) is 30 dmm (dmm=0.1 mm) or less, preferably 20 dmm or less, and particularly preferably 15 dmm or less. It is possible to measure the penetration hardness on the basis of JIS K2207. When the penetration hardness of the unmodified olefin wax (d) is within the ranges described above, the mechanical characteristics of the molding resin composition are excellent.

The limit viscosity $[\eta]$ of the unmodified olefin wax (d) which is measured at 135°C in decalin is normally in a range of 0.04 dl·g$^{-1}$ to 0.47 dl·g$^{-1}$, preferably 0.04 dl·g$^{-1}$ to 0.30 dl·g$^{-1}$, more preferably 0.04 dl·g$^{-1}$ to 0.20 dl·g$^{-1}$, and even more preferably 0.05 dl·g$^{-1}$ to 0.18 dl·g$^{-1}$. When the limit viscosity $[\eta]$ of the unmodified olefin wax (d) is within the ranges described above, the handleability during the modifying is excellent.

1-4-2. Acid-modified Olefin Wax (D1)

A first form of the olefin wax (D) may be an acid-modified olefin wax (D1) of the unmodified olefin wax (d). The acid-modified olefin wax (D1) has a carboxyl group and/or a carboxyl derivative group. The carboxyl group and/or the carboxyl derivative group may be bonded with any portion of the acid-modified olefin wax (D1). The concentration of the carboxyl group and/or the carboxyl derivative group in the acid-modified olefin wax (D1) is not particularly limited, but is preferably in a range of 0.1 meq/g to 6 meq/g with respect to the acid-modified olefin wax (D1). When the concentration is lower than 0.1 meq/g, the rigidity and the impact resistance of the resin composition may not be sufficiently improved. When the concentration is higher than 6 meq/g, the heat stability of the acid-modified olefin wax (D1) may decrease.

The acid-modified olefin wax (D1) is obtained by modifying the unmodified olefin wax (d) with a compound having a carboxyl group and/or a carboxyl derivative group. The carboxyl derivative group includes a carboxylic acid anhydride group, a carboxylic acid salt, a carboxylic acid alkylester/arylester, and the like.

Examples of the compound having a carboxyl group and/or a carboxyl derivative group include unsaturated compounds having one or more carboxylic acid groups, unsaturated compounds having one or more anhydrous carboxylic acid groups, and derivatives thereof. Examples of the unsaturated groups include a vinyl group, a vinylene group, an unsaturated ring hydrocarbon group, and the like.

Specific examples of the compound having a carboxyl group and/or a carboxyl derivative group include unsaturated carboxylic acids such as acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2,2,1]hepto-2-ene-5,6-dicarboxylic acid, acid anhydrides thereof, or derivatives thereof (for example, acid halide, amide, imide, ester, and the like). Furthermore, specific examples of the compound include malenyl chloride, malenyl imide, maleic acid anhydride, itaconic acid anhydride, citraconic acid anhydride, tetrahydrophthalic acid anhydride, bicyclo[2,2,1]hepto-2-ene-5,6-dicarboxylic acid anhydride, monomethyl maleate, hydroxyethyl (meth)acrylate, hydroxypropyl (meth)acrylate, and the like.

More preferable examples of the compounds having a carboxyl group and/or a carboxyl derivative group include maleic acid anhydride, (meth)acrylic acid, itaconic acid anhydride, citraconic acid anhydride, tetrahydrophthalic acid anhydride, bicyclo[2,2,1]hepto-2-ene-5,6-dicarboxylic acid anhydride, and hydroxyethyl (meth)acrylate. Furthermore, a dicarboxylic acid anhydride such as maleic acid anhydride, itaconic acid anhydride, citraconic acid anhydride, tetrahydrophthalic acid anhydride, and bicyclo[2,2,1]hepto-2-ene-5,6-dicarboxylic acid anhydride is particularly preferable. It is also possible to use the compounds having a carboxyl group and/or a carboxyl derivative group singly or in combination.

The acid-modified olefin wax (D1) may be a commercial product. Examples of commercially available acid-modified olefin waxes (D1) include DIACARNA-PA30 (Mitsubishi Chemical Corp.), Hi-wax acid-treated type 2203A and 1105A (Mitsui Chemicals Inc.), paraffin oxide (Nippon Seiro Co., Ltd.), and the like.

The acid-modified olefin wax (D1) may be modified by a styrene-based monomer as well as the compound having a carboxyl group and/or a carboxyl derivative group. Examples of the styrene-based monomer include styrene, methylstyrene, ethylstyrene, 2,4-dimethylstyrene, p-n-butylstyrene, p-tert-butylstyrene, p-n-hexylstyrene, p-n-octylstyrene, p-n-nonylstyrene, p-n-decylstylene, p-n-dodecylstyrene, p-methoxystyrene, p-phenylstyrene, p-chlorostyrene, 3,4-dichlorostyrene, and the like. Among these, styrene is preferable from the viewpoint of removing a non-reactant.

The acid-modified olefin wax (D1) is obtained, for example, by graft reaction of the unmodified olefin wax (d) with the compound having a carboxyl group and/or a carboxyl derivative group and another modified monomer (styrene-based monomer and the like) as necessary.

The method for producing the acid-modified olefin wax (D1) is not particularly limited and it is possible to use various types of methods known in the art. The acid-modified olefin wax (D1) is obtained by simultaneously or successively melt-kneading the unmodified olefin wax (d), the compound having a carboxyl group and/or a carboxyl derivative group, another modified monomer (styrene-based monomer and the like) as necessary, and organic peroxide.

The melt-kneading is carried out, for example, by a single screw extruder, a multi-screw extruder, a kneader, a Banbury mixer, or the like after inserting and kneading in a Henschel mixer, a V type blender, a tumbler blender, a ribbon blender, or the like. When an apparatus having an excellent batch type melt-kneading performance, such as an autoclave, is used from among these, it is possible to obtain the acid-modified olefin wax (D1) in which each component is more evenly dispersed and reacted. As compared to a continuous system, the batch system is easier to adjust the retention time, and to ensure a long retention time and, therefore, it is relatively easy to increase the modifying ratio and the modifying efficiency and, thus, the batch system is the most preferable form in the present invention.

When the acid-modified olefin wax (D1) is graft-modified by an unsaturated carboxylic acid derivative-based monomer and a styrene-based monomer, the graft amount ratio "(unsaturated carboxylic acid derivative-based monomer)/(styrene-based monomer)" is preferably 0.01 to 1, more preferably 0.03 to 0.8, and particularly preferably 0.05 to 0.6. When the graft amount ratio is less than 0.01, the interaction of the unsaturated carboxylic acid derivative-based monomer with the inorganic reinforcing material surface is reduced, and the impact resistance does not easily improve. In addition, when the graft amount ratio is greater than 1, production is difficult since the melt viscosity of the modified olefin wax (D1) is high.

In the acid-modified olefin wax (D1), the graft amount ratio "styrene-based monomer/olefin wax (D)" of the styrene-based monomer with respect to the olefin wax (D) is preferably 0.05 to 3, more preferably 0.07 to 2.5, and particularly preferably 0.1 to 2. When the graft amount ratio is within the ranges described above, the dispersibility of the modified olefin wax (D1) into a thermoplastic resin and a thermosetting resin is superior, and it is possible to obtain a molding resin composition having excellent surface glossiness and impact resistance.

1-4-3. Carbodiimide-modified Olefin Wax (D2)

A second form of the olefin wax (D) may be a carbodiimide-modified olefin wax (D2) of the unmodified olefin wax (d). The carbodiimide-modified olefin wax (D2) is obtained by reacting the unmodified olefin wax (d) with a compound having a functional group which reacts with the carbodiimide group, and obtaining an olefin wax (d') having a group which reacts with a carbodiimide group, and further reacting the olefin wax (d') having a group which reacts with a carbodiimide group with a carbodiimide group-containing compound.

Examples of the compound which has a functional group which reacts with a carbodiimide group include compounds which have a group having active hydrogen which has reactivity with a carbodiimide group. Specifically, the compound is a compound which has a functional group such as carboxylic acid, amine, alcohol, or thiol. Among these, compounds having a group derived from carboxylic acid are favorably used, among which unsaturated carboxylic acid and/or derivatives thereof are particularly preferable. In addition, other than the compound which has a group having active hydrogen, it is also possible to advantageously use a compound which has a group which is easily converted into a group which has active hydrogen by water or the like, and specific examples thereof include a compound which has an epoxy group or a glycidyl group. In the present invention, the compounds which have a functional group which reacts with a carbodiimide group may be used singly or in combination

The unsaturated carboxylic acid and/or the derivative thereof which is used as the compound which has a functional group which reacts with a carbodiimide group may be an unsaturated compound having one or more carboxylic acid groups, an unsaturated compound having one or more anhydrous carboxylic acid groups, derivatives thereof, and the like. Examples of an unsaturated group include a vinyl group, a vinylene group, an unsaturated ring hydrocarbon group, and the like.

Specific examples of the compounds which have a functional group which reacts with a carbodiimide group include an unsaturated carboxylic acid such as acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2,2,1]hepto-2-ene-5,6-dicarboxylic acid, acid anhydrides thereof, or derivatives thereof (for example, acid halide, amide, imide, ester, and the like). Furthermore, specific examples of the compound include malenyl chloride, malenyl imide, maleic acid anhydride, itaconic acid anhydride, citraconic acid anhydride, tetrahydrophthalic acid anhydride, bicyclo[2,2,1]hepto-2-ene-5,6-dicarboxylic acid anhydride, dimethyl maleate, monomethyl maleate, diethyl maleate, diethyl fumarate, dimethyl itanonate, diethyl citraconate, dimethyl tetrahydrophthalate, dimethyl bicyclo[2,2,1]hepto-2-ene-5,6-dicarboxylate, hydroxyethyl (meth)acrylate, hydroxypropyl (meth)acrylate, glycidyl (meth)acrylate, aminoethyl methacrylate, aminopropyl methacrylate, and the like.

It is also possible to use the unsaturated carboxylic acids and/or the derivatives thereof which are compounds which have a functional group which reacts with a carbodiimide group singly or in combination. Among these, maleic acid anhydride, (meth)acrylic acid, itaconic acid anhydride, citraconic acid anhydride, tetrahydrophthalic acid anhydride, bicyclo[2,2,1]hepto-2-ene-5,6-dicarboxylic acid anhydride, hydroxyethyl (meth)acrylate, glycidyl methacrylate, and aminopropyl methacrylate are preferable. Furthermore, a dicarboxylic acid anhydride such as maleic acid anhydride, itaconic acid anhydride, citraconic acid anhydride, tetrahydrophthalic acid anhydride, and bicyclo[2,2,1]hepto-2-ene-5,6-dicarboxylic acid anhydride is particularly preferable.

It is possible to adopt a method known in the art in order to introduce a compound which has a functional group which reacts with a carbodiimide group into the unmodified olefin wax (d). Examples thereof include a method in which a compound which has a functional group which reacts with a carbodiimide group is graft-copolymerized with the unmodified olefin wax (d), and a method in which compound which has a functional group which reacts with a carbodiimide group is radically polymerized with the unmodified olefin wax (d).

Graft Copolymerization Method

In a case of obtaining the olefin wax (d') which has a functional group which reacts with a carbodiimide group by graft copolymerization, the compound which has a functional group which reacts with the carbodiimide group is graft-copolymerized with the unmodified olefin wax (d) and as necessary with another ethylene unsaturated monomer and the like in the presence of a radical initiator. The reaction conditions for graft-modifying the compound which has a functional group which reacts with a carbodiimide group with the unmodified olefin wax (d) are not particularly limited and it is possible to adopt graft polymerization methods known in the art such as a solution method, a method in which the compound is dissolved in an organic solvent, and a melt-kneading method.

Radical Copolymerization Method

It is also possible to obtain the olefin wax (d') which has a functional group which reacts with a carbodiimide group by radically copolymerizing an olefin and a compound which has a functional group which reacts with a carbodiimide group. As the olefin, it is possible to adopt the same olefin as in a case of forming the polyolefin (d) which is the graft main chain described above, and additionally, the compound which has a functional group which reacts with a carbodiimide group is also as described above. With regard to the radical copolymerization, it is possible to adopt the conditions for the radical copolymerization method known in the art.

The number of functional groups which react with a carbodiimide group in one molecular chain in the olefin wax (d') is represented by "Mn/(100xf/M)", where Mn is the number-average molecular weight of the olefin wax (d'), f is the molecular weight of the group which reacts with a carbodiimide group, and M is the content ratio (wt%) of the group which reacts with a carbodiimide group, relative to the whole weight of the olefin wax (d'). The number of the functional groups which react with a carbodiimide group in one molecular chain in the olefin wax (d') is preferably 0.1 to 2, more preferably 0.1 to 1.4, and particularly preferably 0.2 to 0.7.

When the number of the functional groups which react with a carbodiimide group in one molecular chain in the olefin wax (d') falls within the range described above, the reaction of the olefin wax (d') and the carbodiimide group-containing compound proceeds smoothly and the surface appearance of the obtained molded body is improved (surface glossiness improves) and impact resistance is increased. Furthermore, the releasability of the molded body from the mold is improved.

When the content of the functional group which reacts with a carbodiimide group in the olefin wax (d') which has the functional group which reacts with the carbodiimide group exceeds the range described above, it may be difficult to produce the carbodiimide-modified olefin wax (D2) due to the functional groups which react with a carbodiimide group being cross-linked with each other via the carbodiimide group-containing compound. In addition, when the content is in the ranges described above or less, it is possible to produce the carbodiimide-modified olefin wax (D2), but it is not possible to sufficiently improve the effect described above since the number of linkages between the carbodiimide group-containing compound forming the skeleton of the carbodiimide-modified olefin wax (D2) and the olefin resin is reduced.

The number-average molecular weight (Mn) of the olefin wax (d') which is measured by gel permeation chromatography (GPC) is in the range of 400 to 5,000, preferably 500 to 4,000, and more preferably 1,000 to 3,000. When the number-average molecular weight (Mn) is within the range described above, not only stable production is possible, but the dispersibility of the carbodiimide-modified olefin wax (D2) in the resin composition is excellent.

The ratio (Mw/Mn) of the weight-average molecular weight (Mw) and the number-average molecular weight (Mn) of the olefin wax (d') which are measured by gel permeation chromatography (GPC) is in the range of 1.5 to 5.5, preferably 1.6 to 4.0, and more preferably 1.7 to 3.5. When Mw/Mn of the olefin wax (d') is within the ranges described above, the fluidity when molding the molding resin composition of the present invention is suppressed along with bleeding out of the carbodiimide-modified olefin wax (D2) to the molded body surface.

The weight-average molecular weight (Mw) and the number-average molecular weight (Mn) of the olefin wax (d') are values obtained by the gel permeation chromatography (GPC) in terms of polyethylene, and the measurement by the GPC is performed under the conditions where the temperature is 140°C and the solvent is orthodichlorobenzene.

The limit viscosity [η] of the modified olefin wax (d') which is measured at 135°C in decalin is in the range of 0.04 dl·g$^{-1}$ to 0.47 dl·g$^{-1}$, preferably 0.03 dl·g$^{-1}$ to 0.47 dl·g$^{-1}$, more preferably 0.04 dl·g$^{-1}$ to 0.30 dl·g$^{-1}$, and even more preferably 0.05 dl·g$^{-1}$ to 0.18 dl·g$^{-1}$. When the limit viscosity [η] is within the ranges described above, the handleability at the time of the modification reaction is excellent.

The melting point of the modified olefin wax (d') which is measured by differential scanning calorimetry (DSC) is in the range of 65°C to 135°C, preferably 70°C to 120°C, and more preferably 80°C to 110°C. When the melting point is within the ranges described above, the handleability at the time of the modification reaction is excellent and additionally, the releasability of the molded product is also improved.

The density of the olefin wax (d') which is measured by a density-gradient tube method is in the range of 870 kg/m$^3$ to 980 kg/m$^3$, preferably 890 kg/m$^3$ to 960 kg/m$^3$, and more preferably 910 kg/m$^3$ to 940 kg/m$^3$. When the density is within the range described above, it is possible to obtain a molded body having less tackiness on the surface and excellent mechanical characteristics and impact resistance.

The penetration degree of the olefin wax (d') is 30 dmm or less, preferably 25 dmm or less, more preferably 20 dmm or less, and even more preferably 10 dmm or less. When the penetration degree is within the ranges described above, the mechanical properties of the molding resin composition are excellent. It is possible to measure the penetration degree on the basis of JIS K2207.

The olefin wax (d') may be an individual wax or a mixture of different types of modified olefin waxes or may be used in a mixture with waxes which are used as other ordinary mold releasing agents.

The carbodiimide-modified olefin wax (D2) is produced by reacting the olefin wax (d') which has a functional group which reacts with a carbodiimide group and a carbodiimide group-containing compound.

The carbodiimide group-containing compound is polycarbodiimide which has a repeating unit represented by the following general Formula (1).

$$-N=C=N- \qquad (1)$$

The carbodiimide group-containing compound may be a polycarbodiimide compound. Regarding the polycarbodiimide compound, there may be cases where the polycarbodiimide consists of only one repeating unit , and it is also possible to use the polycarbodiimide group-containing compound individually or by mixing different types of carbodiimide group-containing compounds.

The method for synthesizing the carbodiimide group-containing compound is not particularly limited. For example, it is possible to synthesize the carbodiimide group-containing compound by reacting an organic polyisocyanate in the presence of a catalyst which promotes a carbodiimidification reaction of an isocyanate group. In addition, it is also possible to use a commercially available carbodiimide group-containing compound. Examples of the commercially available carbodiimide group-containing compound include Carbodilite HMV-8CA or LA1 (both product names) produced by Nisshinbo Chemical Inc., and the like.

The number-average molecular weight (Mn) in terms of polystyrene of the carbodiimide group-containing compound which is obtained by gel permeation chromatography (GPC) is normally 400 to 500,000, preferably 1,000 to 10,000, and more preferably 2,000 to 4,000. When the number-average molecular weight (Mn) is within these ranges, a carbodiimide-modified olefin wax (D2) having an excellent filler reinforcing property or an effect of improving the dispersibility is obtained. It is possible to carry out the GPC measurement using Waters 515 [column: Shodex GPC K-806L+ K-806L] and chloroform as a solvent at a temperature of 40°C, a differential refractive index system as a detector, and monodispersed polystyrene as a reference.

The number of repeating units of the carbodiimide group-containing compound is preferably 2 mers to 15 mers, more preferably 3 mers to 13 mers, and particularly preferably 3 mers to 11 mers.

The carbodiimide equivalent weight of the carbodiimide-modified olefin wax (D2) is normally 0.1 to 5, preferably 0.3 to 4, and more preferably 0.5 to 3. When the equivalent weight is smaller than the ranges described above, it is difficult to exhibit interaction between the carbodiimide-modified olefin wax (D2) and the inorganic reinforcing material (B), which leads for example to deterioration in the surface appearance of the resin molded body. When the carbodiimide equivalent weight is large, the olefin ratio is relatively small and it is not possible to obtain the releasing effect.

It is possible to measure the content of the carbodiimide groups in the carbodiimide-modified olefin wax (D2) using $^{13}$C-NMR, IR, a titration method, and the like as the carbodiimide equivalent weight. In the same manner, it is also possible to measure the content of the carbodiimide groups in a carbodiimide group compound (E) by $^{13}$C-NMR, IR, a titration method, and the like as the carbodiimide equivalent weight.

In a case of obtaining the carbodiimide equivalent weight using $^{13}$C-NMR measurement, the measurement is performed as follows. 0.35 g of a sample is heated to be dissolved in 2.0 ml of hexachlorobutadiene. After filtering the solution through a glass filter (G2), 0.5 ml of deuterated benzene is added and loaded into a NMR tube with an internal diameter of 10 mm. Then, $^{13}$C-NMR measurement is performed at 120°C using GX-500 type NMR spectrometer manufactured by JEOL Ltd. The cumulative number is set to 10,000 times or more. The carbodiimide equivalent weight is obtained using a signal of 130 ppm to 142 ppm.

In a case of obtaining the carbodiimide equivalent weight using IR measurement, measurement is performed as follows. After producing a heat-pressed sheet by heating a sample at 250°C for 3 minutes, an infrared absorption spectrum is measured by a transmission method using an infrared spectrophotometer (manufactured by Jasco Corp., FT-IR 410 model). The measurement conditions are set to a resolution of 2 cm$^{-1}$ and a cumulative 1number of 32 times. Observation is possible using the absorption of 2130 cm$^{-1}$ to 2140 cm$^{-1}$ in the IR.

As described above, the carbodiimide-modified olefin wax (D2) is produced by reacting the modified olefin wax (d') which has a functional group which reacts with a carbodiimide group and the carbodiimide group-containing compound. The production method is not particularly limited and it is possible to produce the carbodiimide-modified olefin wax (D2) in accordance with various types of methods known in the art. Examples thereof include a batch type modifying method using an autoclave or the like, or continuous type modification using an extruder or the like.

Examples will be given below of a case of carrying out continuous type melt-kneading. The carbodiimide-modified olefin wax (D2) is obtained by simultaneously or successively melt-kneading the modified olefin wax (d') having a functional group which reacts with a carbodiimide group together with the carbodiimide group-containing compound, for example, using a single screw extruder, a multi-screw extruder, a kneader, a Banbury mixer, or the like after inserting and kneading in a Henschel mixer, a V type blender, a tumbler blender, a ribbon blender, or the like. It is preferable to use an apparatus having excellent kneading performance such as a multi-screw extruder, a kneader, or a Banbury mixer among these since it is possible to obtain a polymer composition where each component is more evenly dispersed and reacted.

Examples will be given below of a case of carrying out batch type melt-kneading. The carbodiimide-modified olefin wax (D2) is obtained by simultaneously or successively melt-kneading the olefin wax (d') and the carbodiimide group-containing compound, for example, in an oven such as an autoclave. Since it is easy to adjust the retention time of the batch type melt-kneading and it is possible to make the retention time long compared to the continuous type, the modifying ratio and the modifying efficiency are comparatively easily increased and the batch type is a desirable form in the present invention.

The modification amount of the carbodiimide group-containing compound with respect to the modified olefin wax (d') having a functional group which reacts with a carbodiimide group is preferably 2 parts by weight to 60 parts by weight with respect to 100 parts by weight of the modified olefin wax (d') and more preferably 2 parts by weight to 30 parts by weight. When the modification ratio is smaller than the ranges described above, it is difficult to exhibit interaction between the carbodiimide-modified olefin wax (D2) and the inorganic reinforcing material (B). This leads to deterioration in the surface appearance of the resin molded body. When the modification ratio is larger than the ranges described above, the ratio of the olefin components is relatively small and it is not possible to obtain the mold releasing effect.

1-4-4. Oxidized Olefin Wax (D3)

A third form of the olefin wax (D) may be an oxidized olefin wax (D3) of the unmodified olefin wax (d). The oxidized olefin wax (D3) is obtained by bringing the unmodified olefin wax (d) into contact with oxygen-containing gas. The oxygen-containing gas may be pure oxygen (which is obtained by liquid air fractional distillation or electrolyzing water and may include other components to the extent that oxygen includes such components as impurities) or may include a mixed gas of pure oxygen and other gases, for example, air, and ozone. The oxidized olefin wax (D3) has a carboxyl group, a carbonyl group and/or a hydroxyl group. The carboxyl group, the carbonyl group and/or the hydroxyl group may be bonded to any part of the oxidized olefin wax (D3). The concentration of the carboxyl group, the carbonyl group and/or the hydroxyl group in the oxidized olefin wax (D3) is not particularly limited, but is preferably in the range of 0.1 meq/g to 6 meq/g with respect to the oxidized olefin wax (D3). When the concentration is lower than 0.1 meq/g, the rigidity and the impact resistance of the molded body of the resin composition may not be sufficiently improved. When the concentration is higher than 6 meq/g, the heat stability of the oxidized olefin wax (D3) may decrease.

The oxidized olefin wax (D3) may be a commercial product. Examples of commercially available oxidized olefin waxes (D3) include Sunwax (Sanyo Chemical Industries Ltd.), PETROLITE (BAKER HUGHES Inc.), LICOWAX (CLARIANT K.K.), VISCOWAX (INNOSPECLEUNA), and the like.

The content of the olefin wax (D) in the molding resin composition of the present invention is 0.01 parts by weight to 10 parts by weight with respect to 100 parts by weight of the total of the resin (A), the inorganic reinforcing material (B), and the functional group-containing olefin polymer (C), preferably 0.05 to 8 parts by weight, more preferably 0.1 to 7 parts by weight, and even more preferably 0.2 to 5 parts by weight. It is difficult to obtain favorable moldability or impact resistance when the content is less than 0.01 parts by weight; while the mechanical properties of the molded body of the resin composition are easily decreased when the content is more than 10 parts by weight.

In addition, the "total content of the olefin polymer (C) and the olefin wax (D)" in the molding resin composition of the present invention is 1.01 parts by weight to 56 parts by weight with respect to 100 parts by weight of the total of the resin (A), the inorganic reinforcing material (B), and the functional group-containing olefin polymer (C), preferably 3 parts by weight to 53 parts by weight, and more preferably 5 parts by weight to 50 parts by weight. When the total ratio of the resin (A) and the inorganic reinforcing material (B) is relatively excessively high, the impact resistance or the surface glossiness of the molded object decreases. In addition, when the total ratio of the resin (A) and the inorganic reinforcing material (B) is relatively excessively low, the mechanical characteristics, particularly rigidity, decrease.

Furthermore, the content ratio "C/D" of the functional group-containing olefin polymer (C) to the olefin wax (D) in the molding resin composition of the present invention is 0.1 to 30, preferably 1.1 to 25, more preferably 1.2 to 20, and particularly preferably 1.5 to 15. When the ratio of the olefin polymer (C) is relatively excessively high, the impact resistance of the molded object may be low or the releasability when detaching the molded object from the mold may deteriorate. In addition, when the ratio of the olefin wax (D) is relatively excessively high, the surface glossiness of the molded body is easily deteriorated by the inorganic reinforcing material (B) also being entrained on the molded body surface at the same time as the olefin wax (D) with low molecular weight is displaced to the molded body surface during the molding.

1-5. Optional Component

Optional additive agents, for example, flame retardants such as brominated bisphenol, brominated epoxy resin, brominated polystyrene, brominated polycarbonate, triphenyl phosphate, phosphonic amide, and red phosphorus; flame retardant promoters such as antimony trioxide and sodium antimonate; heat stabilizers such as a phosphate and a phosphite; antioxidants such as hindered phenol; a heat-resistant agent, a weather-proofing agent, a photostabilizer, a releasing agent, a fluidity modifying agent, a coloring agent, a lubricant, an antistatic agent, a crystal nucleating agent, a plasticizer, a foaming agent, a softening agent, a filler, and the like may be blended with the resin composition of the present invention in an amount effective for imparting specific properties as necessary to an extent which does not impair the object and effects of the present invention.

2. Method for Producing Molding Resin Composition

It is possible to produce the molding resin composition of the present invention using any of various methods. For example, a method is appropriately used that involves mixing at least one resin (A) selected from a thermoplastic resin or a thermosetting resin, the inorganic reinforcing material (B), the olefin polymer (C), the olefin wax (D), and other optional components at the same time or in any order using a tumbler, a V type blender, a Nauta mixer, a Banbury mixer, a kneading roller, a single screw or twin screw extruder, or the like.

As a method for adding the olefin wax (D) to the molding resin composition, the olefin wax (D) is attached to and impregnated into the inorganic reinforcing material (B) beforehand, and this may be added to the molding resin composition. When the inorganic reinforcing material (B) is in a continuous fiber form, a fiber bundle and an oil agent, a sizing material, and a matrix resin may be brought into contact with each other beforehand and the olefin wax (D) may be attached to and impregnated into the inorganic reinforcing material (B).

The method for attaching the olefin wax (D) to the inorganic reinforcing material (B) is not particularly limited; examples thereof include a method for attaching the olefin wax (D) to the inorganic reinforcing material (B) by passing a continuous roving which includes the inorganic reinforcing material (B) into an impregnating bath into which an emulsion, suspension, solution, or melt of the olefin wax (D), is placed; a method for coating the olefin wax (D) on the inorganic reinforcing material (B) using a reverse roller, a positive roller, a kiss roller, a spray, and a curtain; a method for attaching the olefin wax (D) powder to the inorganic reinforcing material (B) by spraying the olefin wax (D) powder to a continuous roving which includes the inorganic reinforcing material (B) or passing the continuous roving which includes the inorganic reinforcing material (B) into a bath into which the olefin wax (D) powder is placed and then melting the result; a method for supplying the olefin wax (D) to a cross head from an extruder or the like while passing the continuous roving which includes the inorganic reinforcing material (B) through the cross head; and the like.

The method for impregnating the olefin wax (D) into the inorganic reinforcing material (B) is not particularly limited, and may be, for example, a method for impregnating the olefin wax (D) up to the inner section of the inorganic reinforcing material (B) with an operation such as applying tension to the inorganic reinforcing material (B) with a roller or bar, repeating widening and bundling, and applying pressure or vibration, at a temperature at which the olefin wax (D) melts. More specific examples thereof include a method for impregnating the olefin wax (D) by passing a fiber bundle so as to come into contact with the surface of a plurality of heated rollers or bars and be widened, or the like. Among these, a method for impregnating the olefin wax (D) into the inorganic reinforcing material (B) using a squeezing metal nozzle, a squeezing roller, a roll press, or a double belt press is favorably used.

The squeezing metal nozzle is a nozzle with a diameter which narrows in the traveling direction and is able to facilitate impregnation at the same time as scraping the olefin wax (D) which is excessively attached to the inorganic reinforcing material (B) while gathering a bundle of reinforcing fibers. The squeezing roller is a roller which is able to facilitate impregnation at the same time as scraping the olefin wax (D) which is excessively attached to the inorganic reinforcing material (B) by applying tension to the bundle of reinforcing fibers of the inorganic reinforcing material (B) using a roller. In addition, the roll press is an apparatus which facilitates impregnation at the same time as continuously removing air in the inner section of the bundle of reinforcing fibers of the inorganic reinforcing material (B) by using pressure between two rollers. The double belt press is an apparatus which facilitate impregnation by pressing the bundle of reinforcing fibers of the inorganic reinforcing material (B) from above and below via a belt.

In addition, even when the inorganic reinforcing agent (B) is not in a continuous fiber form, it is possible to impregnate the inorganic reinforcing material (B) and attach thereto the olefin wax (D) by mixing the olefin wax (D), which is either molten or dispersed or dissolved in water or various types of solvents, with the inorganic reinforcing material (B) and then removing water and the solvent when used.

In addition, the method of producing a molding resin composition of the present invention may include a step of preparing a masterbatch which includes the olefin polymer (C) and the olefin wax (D) and a step of melt-kneading the masterbatch, the resin (A), and the inorganic reinforcing material (B).

The olefin polymer (C) and the olefin wax (D) are included in the masterbatch. In the molding resin composition of the present invention, it may be difficult to evenly disperse the olefin polymer (C) and the olefin wax (D). Thus, it is possible to carry out even dispersion by preparing the masterbatch which includes the olefin polymer (C) and the olefin wax (D) and further mixing the masterbatch, the resin (A), and the inorganic reinforcing material (B). In addition, the coverage of the olefin wax (D) on the inorganic reinforcing material (B) is improved and the inorganic reinforcing material (B) does not easily protrude from the surface of the molded body. For this reason, the surface glossiness of the molded body increases and the appearance or design of the molded body is improved.

In addition, the masterbatch which includes the olefin polymer (C) and the olefin wax (D) improves the heat resistance more than the olefin polymer (C) or the olefin wax (D). The mechanism which improves the heat resistance is not clear; however, it may be considered that this is because the olefin polymer (C) and the olefin wax (D) undergoes a cross-linking reaction by being melt-kneaded and the easily-volatile low molecular weight components decrease. Then, the molding resin composition which uses the masterbatch which includes the olefin polymer (C) and the olefin wax (D) improves the heat resistance compared to a molding resin composition which is prepared without going through a masterbatch. Having high heat resistance is an advantage for a case where an engineered plastic, particularly a super engineered plastic for which there is a demand for heat resistance, is used as the thermoplastic resin since it is possible to suppress the generation of fumes or burning.

The difference between a 5% thermal reduction temperature of the masterbatch according to thermogravimetry and differential thermal analysis (TG-DTA) and the 5% thermal reduction temperature of the functional group-containing olefin polymer (C) or the olefin wax (D) is preferably 20°C or higher and more preferably 30°C or higher. In other words, at least one of the difference between the 5% thermal reduction temperature of the masterbatch and the 5% thermal reduction temperature of the olefin polymer (C) and the difference between the 5% thermal reduction temperature of the masterbatch and the 5% thermal reduction temperature of the olefin wax (D) is preferably 20°C or higher. Normally, the 5% thermal reduction temperature of the masterbatch is higher than the 5% thermal reduction temperature of the functional group-containing olefin polymer (C) or the olefin wax (D). Then, the difference being 20°C or higher indicates that the heat resistance is increased by setting the masterbatch. The 5% thermal reduction temperature is the temperature at which the weight is reduced by 5% by heating and is measured by thermogravimetry and differential thermal analysis (TG-DTA) measurement.

The weight ratio C/D of the olefin polymer (C) and the olefin wax (D) in the masterbatch is 0.1 to 30, preferably 1 to 25, and more preferably 2 to 20. When the ratio of the olefin polymer (C) is relatively excessively high, the impact resistance of the molded object may be low or the releasability when detaching the molded object from the mold may deteriorate. In addition, when the ratio of the olefin wax (D) is relatively excessively high, it is difficult to produce the masterbatch since the melt viscosity is low. Furthermore, the surface appearance of the molded body deteriorates and for example, the glossiness easily decreases.

In addition, a small amount of the resin (A) may be included in the masterbatch and the optional components described above may be included. The masterbatch may be produced by mixing the components using a tumbler, a V type blender, a Nauta mixer, a Banbury mixer, a kneading roller, a single screw or twin screw extruder, or the like.

Next, the molding resin composition of the present invention is obtained by melt-kneading the masterbatch, the resin (A), and the inorganic reinforcing material (B).

3. Use of Molding Resin Composition

It is possible to mold the resin composition of the present invention for use as a molded body. The molding method is not particularly limited; however, the molding may be carried out by injection molding, extrusion molding, compression molding, or the like and injection molding is preferable from the viewpoint of design and moldability.

The resin composition of the present invention may be molded into a molded body for a wide range of uses from home products to industrial products. Examples of molded bodies include electrical components, electronic components, components for automobiles, components for machine mechanisms, food containers, films, sheets, fibers, and the like. In more detail, examples thereof include office or office automation equipment such as printers, personal computers, word processors, keyboards, personal digital assistants (PDA) (small information terminals), telephones, mobile phones, smart phones, tablet terminals, WiFi routers, facsimile machines, copiers, electronic cash registers (ECR), calculators, electronic notebooks, electronic dictionaries, cards, holders, and stationery; home appliances such as washing machines, refrigerators, vacuum cleaners, microwave ovens, lighting equipment, game machines, irons, and table heaters; AV equipment such as TVs, VTRs, video cameras, digital cameras, single lens reflex cameras, mobile audio terminals, radio-cassette recorders, tape recorders, mini discs, CD players, speakers, and liquid crystal displays; electrical and electronic components and communication equipment such as connectors, relays, condensers, switches, printed substrates, coil bobbins, semiconductor sealing material, electrical wires, cables, transformers, deflection yokes, distribution boards, and clocks; and the like.

Additional examples include materials for automobiles, vehicles, ships, airplanes, and construction such as seats (padding, outer material, and the like), belts, ceiling coverings, convertible tops, arm rests, door trims, rear package trays, carpets, mats, sun visors, foil covers, tires, mattress covers, air bags, insulation materials, hanging straps, hanging strap bands, electrical wire covering materials, electrical insulation materials, paints, coating materials, overlay materials, flooring materials, corner walls, deck panels, covers, plywood, ceiling boards, partition boards, side walls, carpets, wall papers, wall covering materials, exterior materials, interior materials, roof materials, acoustic insulation boards, thermal insulating boards, and window materials; living and sporting goods such as clothes, curtains, sheets, plywood, synthetic fiber boards, carpets, doormats, sheets, buckets, hoses, containers, eyeglasses, bags, cases, goggles, ski boards, rackets, tents, and musical instruments; and the like.

Further examples include bottles such as shampoo or detergent bottles, seasoning bottles such as cooking oil and soy sauce bottles, bottles for beverages such as mineral water or juice, heat resistant food containers such as lunch boxes and bowls for steamed egg curd, tableware such as plates and chopsticks, various other types of food containers, wrapping films, wrapping bags, and the like.

Examples

More detailed description will be given below of the present invention based on Examples; however, the present invention is not limited to these Examples.

The following were used as the functional group-containing olefin polymer (C).

(C-1) Methacrylate butadiene styrene copolymer

Kaneace M-711: MFR 0.3 kg/10 min (200°C, 5 kg), Tg -80°C, density 951 kg/m$^3$, 5% thermal reduction temperature 320°C

(C-2) Acrylonitrile butadiene styrene copolymer

Techno ABS 130: MFR 18 kg/10 min (220°C, 10 kg), Tg -80°C, density 1050 kg/m$^3$

(C-3) Acrylonitrile butadiene styrene copolymer

Techno ABS 350: MFR 55 kg/10 min (220°C, 10 kg), Tg -80°C, density 1040 kg/m$^3$

(C-4) Methacrylate butadiene styrene copolymer

Kaneace M-511: MFR 4.3 kg/10 min (200°C, 5 kg), Tg -79°C, density 948 kg/m$^3$, 5% thermal reduction tem-

perature 329°C

(C-5) Methacrylate butadiene styrene copolymer

Metablen C-223A: MFR 3.3 kg/10 min (200°C, 5 kg), Tg -79°C, density 950 kg/m$^3$, 5% thermal reduction temperature 321°C

(C-6) Methacrylate styrene copolymer

Kaneace FM-40: MFR 8.0 kg/10 min (200°C, 5 kg), Tg -42°C, density 1000 kg/m$^3$, 5% thermal reduction temperature 281°C

(C-7) Methacrylate dimethylsiloxane styrene copolymer

Kaneace MR-01: MFR 10.0 kg/10 min (200°C, 5 kg), Tg -125°C, density 1080 kg/m$^3$, 5% thermal reduction temperature 286°C
Hi-wax 1105A (Mitsui Chemicals Inc.), which is an acid-modified polyethylene wax, was used as the olefin wax (D) which includes a group which has an element selected from oxygen and nitrogen.

[Table 1]

| Name | Hi-wax 1105A |
|---|---|
| Density (kg/m$^3$] | 940 |
| Melting point [°C] | 104 |
| Number-average molecular weight | 820 |
| Weight-average molecular weight | 1500 |
| Molecular weight distribution | 1.8 |
| Acid value [mgKOH/g] | 60 |

Each property of the Hi-wax 1105A was analyzed using the methods below.

Density

Measurement was carried out using a density-gradient tube on the basis of JIS K 7112.

Melting Point

Using DSC (RDC 220) manufactured by SII Corp., measurement was carried out by heating to 200°C at 50 °C/min, decreasing the temperature to 30°C at 20 °C/min, maintaining the temperature for 5 minutes and, then, measuring up to 200°C while heating at 10 °C/min. In a case where there are two or more peaks, the peak whose strength is the highest is set as the melting point.

Number-average molecular weight (Mn), Weight-Average Molecular Weight (Mw), and Molecular Weight Distribution (Mw/Mn)

The number-average molecular weight (Mn), the weight-average molecular weight (Mw), and the molecular weight distribution (Mw/Mn) of the modified olefin wax (D) having a functional group which reacts with a carbodiimide group were obtained by GPC measurement. The GPC measurement was performed under the conditions below. In addition, the weight-average molecular weight (Mw) and the number-average molecular weight (Mn) were obtained based on the following conversion method after creating a calibration curve using a commercially available monodispersed standard polystyrene.

Apparatus: Gel permeation chromatograph Alliance GPC 2000 type (manufactured by Waters Corp.)
Solvent: o-dichlorobenzene
Column: TSKgel GMH6-HT x2, TSKgel GMH6-HTL column x2 (both from Tosoh Corp.)

Flow rate: 1.0 ml/min
Sample: 0.15 mg/mL o-dichlorobenzen solution
Temperature: 140°C
Molecular weight conversion: in terms of PE/general calibration method

Here, a coefficient of Mark-Houwink viscosity equation was used for the calculation of the general calibration. The values described in the document (J. Polym. Sci., Part A-2,8, 1803 (1970), Makromol.Chem., 177, 213 (1976)) were used as Mark-Houwink coefficients of PS and PE.

Acid Value

Measurement was carried out on the basis of JIS K 5902.

Example 1

A pelletized inorganic reinforcing material blend composition was obtained by melt-kneading 80 parts by weight of an aromatic polycarbonate resin (Teijin Ltd.: Panlite L-1225Y, 5% thermal reduction temperature 480°C), 10 parts by weight of glass fiber for polycarbonate (Nitto Boseki Co., Ltd.: Chopped strand CS(F) 3PE455S), 10 parts by weight of a methacrylate butadiene styrene copolymer (Kaneka Corp.: Kaneace M-711), and 0.5 parts by weight of an acid-modified polyethylene wax (Mitsui Chemicals Inc.: Hi-wax 1105A) using a one-way rotating twin screw extruder HK25D (Parker Corporation, Inc.: φ25 mm, L/D=41) and extruding the kneaded mass at a cylinder temperature of 280°C.
After drying the obtained pellets at 120°C for 8 hours, test pieces were produced in accordance with the respective JIS tests by carrying out injection molding under the conditions of a cylinder temperature of 280°C, a screw rotation speed of 60 rpm, an injection pressure of 130 MPa, and a mold temperature of 90°C using an injection molding apparatus (Niigata Machine Techno Co., Ltd., Niigata NN100). Each of the properties of the produced test pieces was evaluated by the methods shown below.

(a) Charpy Impact Test

The Charpy impact value of the produced test piece was measured under the conditions of: hammer weight of 2J, moment around the hammer rotation of 1.08 N-J, hammer lifting angle of 50°, impact speed of 2.9 m/s, and a distance from the rotation axis to the impact point of 0.23 m, based on JIS K-7111.

(b) Bending Test

The modulus of elasticity and the strength of the produced test pieces were measured under the conditions of: load range of 50 kg, test speed of 2 mm/min, and bending span of 64 mm on the basis of JIS K-7171.

(c) Tension Test

The yield and breaking strength and stretching were measured under the conditions of: load range of 1000 kg, test speed of 500 mm/min, and gripping span of 115 mm based on JIS K-7162-1A.

(d) Surface Gloss Evaluation

The 60° reflectivity of the produced test pieces (100 mmx100 mmx4 mm) was measured using GLOSS METER GM-3D (manufactured by MURAKAMI Color Lab.). Total of 5 separate measurements were made in the vicinity of a gate for each of the front side and the back side of the test piece, and an average of the measured values was calculated.

(e) Mold Releasability Evaluation

A cup-type molded body (φ50x50x1.6 mm) was produced using an injection molding apparatus. When ejecting the molded product with 4 ejector pins for mold release, molded products without visually observable damage, such as cracks, deformation, or the cup bottom being punched through, were ranked A, and molded products with visually observable cracks, deformation, or other damages were ranked B or F depending on the state.

(f) Heat Resistance Evaluation

The weight change of approximately 10 mg of pellets placed on an aluminum pan under an air flow rate of 200 mL/min was measured while increasing the temperature to 700°C at 10 °C/min using TG-DTA 7300 manufactured by SII Corp., and the temperature where the weight decreased by 5% due to the temperature increase was recorded as the 5% thermal reduction temperature. In addition, the 5% thermal reduction rate was calculated based on the following equation by using the 5% thermal reduction temperature of the resin (A) and of the resin composition and the added amounts of the functional group-containing olefin polymer (C) and the olefin wax (D). The thermal reduction rate indicates the degree of decrease in the heat resistance of the resin composition caused by an addition of a predetermined amount of the functional group-containing olefin polymer (C) and the olefin wax (D). In other words, the smaller the thermal reduction rate is, the smaller the influence (the heat resistance decrease) due to the addition of the functional group-containing olefin polymer (C) and the olefin wax (D).

5% thermal reduction rate={(5% thermal reduction temperature of A)-(5% thermal reduction temperature of resin composition)}/(total added amount of C and D)

Example 2

Except for changing the added amount of the acid-modified polyethylene wax (Mitsui Chemicals Inc.: Hi-wax 1105A) to 1 part by weight, a glass fiber reinforcing material blended thermoplastic composition was obtained by pelletizing in the same manner as in Example 1. Test pieces were produced by performing injection molding in the same manner as in Example 1 and the same evaluation tests were performed.

Example 3

Except for changing the added amount of the acid-modified polyethylene wax (Mitsui Chemicals Inc.: Hi-wax 1105A) to 3 parts by weight, a glass fiber reinforcing material blended thermoplastic composition with a 5% thermal reduction temperature of 431 °C was obtained by pelletizing in the same manner as in Example 1. Test pieces were produced by performing injection molding in the same manner as in Example 1 and the same evaluation tests were performed.

Example 4

A glass fiber reinforcing material blended thermoplastic composition was obtained by pelletizing in the same manner as Example 1 using 70 parts by weight of an aromatic polycarbonate resin (Teijin Ltd.: Panlite L-1225Y), 10 parts by weight of glass fiber for polycarbonate (Nitto Boseki Co., Ltd.: Chopped strand CS3PE455S), 20 parts by weight of an acrylonitrile butadiene styrene copolymer (Techno Polymer Co., Ltd.: Techno ABS 130, MFR 18), and 3 parts by weight of an acid-modified polyethylene wax (Mitsui Chemicals Inc.: Hi-wax 1105A). Test pieces were produced by performing injection molding in the same manner as in Example 1 and the same evaluation tests were performed.

Example 5

Except for changing the added amount of the aromatic polycarbonate resin (Teijin Ltd.: Panlite L-1225Y) to 60 parts by weight and the acrylonitrile butadiene styrene copolymer (Techno Polymer Co., Ltd.: Techno ABS 130, MFR 18) to 30 parts by weight, a glass fiber reinforcing material blended thermoplastic composition was obtained by pelletizing in the same manner as in Example 4. Test pieces were produced by performing injection molding in the same manner as in Example 1 and the same tests were performed.

Example 6

Except for changing the acrylonitrile butadiene styrene copolymer (Techno Polymer Co., Ltd.: Techno ABS 130, MFR 18) to an acrylonitrile butadiene styrene copolymer (Techno Polymer Co., Ltd.: Techno ABS 350, MFR 55), a glass fiber reinforcing material blended thermoplastic composition was obtained by pelletizing in the same manner as in Example 5. Test pieces were produced by performing injection molding in the same manner as in Example 1 and the same tests were performed.

Example 7

A masterbatch was obtained by extruding 10 parts by weight of a methacrylate butadiene styrene copolymer (Kaneka Corp.: Kaneace M-711) and 3 parts by weight of an acid-modified polyethylene wax (Mitsui Chemicals Inc.: Hi-wax 1105A) at a cylinder temperature of 220°C using a one-way rotating twin screw extruder HK25D (Parker Corporation, Inc.: φ25 mm, L/D=41). The 5% thermal reduction temperature was 320°C for the Kaneace M-711, 285°C for the Hi-wax 1105A, and 352°C for the masterbatch.

Except for changing the methacrylate butadiene styrene copolymer (Kaneka Corp.: Kaneace M-711) and the acid-modified polyethylene wax (Mitsui Chemicals Inc.: Hi-wax 1105A) to 13 parts by weight of the masterbatch, a glass fiber reinforcing material blended thermoplastic composition with a 5% thermal reduction temperature of 438°C was obtained by pelletizing in the same manner as in Example 1. Test pieces were produced by performing injection molding in the same manner as in Example 1 and the same tests were performed.

Example 8

Except for changing the aromatic polycarbonate resin (Teijin Ltd.: Panlite L-1225Y) to 85 parts by weight, the glass fiber for polycarbonate (Nitto Boseki Co., Ltd.: Chopped strand CS(F) 3PE455S) to 10 parts by weight, the methacrylate styrene copolymer (Kaneka Corp.: Kaneace FM-40) to 5 parts by weight, and the acid-modified polyethylene wax (Mitsui Chemicals Inc.: Hi-wax 1105A) to 1.5 parts by weight, a glass fiber reinforcing material blended thermoplastic composition was obtained by pelletizing in the same manner as in Example 1. Test pieces were produced by performing injection molding in the same manner as in Example 1 and the same evaluation tests were performed.

Example 9

Except for changing the methacrylate butadiene styrene copolymer (Kaneka Corp.: Kaneace FM-40) to a methacrylate dimethylsiloxane styrene copolymer (Kaneka Corp.: Kaneace MR-01), a glass fiber reinforcing material blended thermoplastic composition was obtained by pelletizing in the same manner as in Example 8. Test pieces were produced by performing injection molding in the same manner as in Example 1 and the same evaluation tests were performed.

Example 10

Except for changing the methacrylate butadiene styrene copolymer (Kaneka Corp.: Kaneace M-711) and the acid-modified polyethylene wax (Mitsui Chemicals Inc.: Hi-wax 1105A) to 6.5 parts by weight of the masterbatch which was prepared in Example 7, a glass fiber reinforcing material blended thermoplastic composition was obtained by pelletizing in the same manner as in Example 1. Test pieces were produced by performing injection molding in the same manner as in Example 1 and the same tests were performed.

Example 11

A masterbatch was obtained by extruding 10 parts by weight of a methacrylate butadiene styrene copolymer (Kaneka Corp.: Kaneace M-511) and 3 parts by weight of an acid-modified polyethylene wax (Mitsui Chemicals Inc.: Hi-wax 1105A) at a cylinder temperature of 220°C using a one-way rotating twin screw extruder HK25D (Parker Corporation, Inc.: φ25 mm, L/D=41).

Except for changing the methacrylate butadiene styrene copolymer (Kaneka Corp.: Kaneace M-711) and the acid-modified polyethylene wax (Mitsui Chemicals Inc.: Hi-wax 1105A) to 13 parts by weight of the masterbatch, a glass fiber reinforcing material blended thermoplastic composition was obtained by pelletizing in the same manner as in Example 1. Test pieces were produced by performing injection molding in the same manner as in Example 1 and the same tests were performed.

Example 12

Except for changing the methacrylate butadiene styrene copolymer (Kaneka Corp.: Kaneace M-711) and the acid-modified polyethylene wax (Mitsui Chemicals Inc.: Hi-wax 1105A) to 6.5 parts by weight of the masterbatch which was prepared in Example 11, a glass fiber reinforcing material blended thermoplastic composition was obtained by pelletizing in the same manner as in Example 1. Test pieces were produced by performing injection molding in the same manner as in Example 1 and the same tests were performed.

Example 13

A masterbatch was obtained by extruding 10 parts by weight of a methacrylate butadiene styrene copolymer (Mitsubishi Rayon Co., Ltd.: Metablen C-223A) and 3 parts by weight of an acid-modified polyethylene wax (Mitsui Chemicals Inc.: Hi-wax 1105A) at a cylinder temperature of 220°C using a one-way rotating twin screw extruder HK25D (Parker Corporation, Inc.: φ25 mm, L/D=41). The 5% thermal reduction temperature was 321°C for the Metablen C-223A, 285°C for Hi-wax 1105A, and 360°C for the masterbatch.

Except for changing the methacrylate butadiene styrene copolymer (Kaneka Corp.: Kaneace M-711) and the acid-modified polyethylene wax (Mitsui Chemicals Inc.: Hi-wax 1105A) to 13 parts by weight of the masterbatch, a glass fiber reinforcing material blended thermoplastic composition with a 5% thermal reduction temperature of 442°C was obtained by pelletizing in the same manner as in Example 1. Test pieces were produced by performing injection molding in the same manner as in Example 1 and the same tests were performed.

Example 14

Except for changing the methacrylate butadiene styrene copolymer (Kaneka Corp.: Kaneace M-711) and the acid-modified polyethylene wax (Mitsui Chemicals Inc.: Hi-wax 1105A) to 6.5 parts by weight of the masterbatch which was prepared in Example 13, a glass fiber reinforcing material blended thermoplastic composition was obtained by pelletizing in the same manner as in Example 1. Test pieces were produced by performing injection molding in the same manner as in Example 1 and the same tests were performed.

Comparative Example 1

Except for changing the aromatic polycarbonate resin (Teijin Ltd.: Panlite L-1225Y) to 90 parts by weight and not adding the methacrylate butadiene styrene copolymer (Kaneka Corp.: Kaneace M-711) and the acid-modified polyethylene wax (Mitsui Chemicals Inc.: Hi-wax 1105A), a glass fiber reinforcing material blended thermoplastic composition was obtained by pelletizing in the same manner as in Example 1. Test pieces were produced by performing injection molding in the same manner as in Example 1 and the same tests were performed.

Comparative Example 2

Except for changing the aromatic polycarbonate resin (Teijin Ltd.: Panlite L-1225Y) to 90 parts by weight and not adding the methacrylate butadiene styrene copolymer (Kaneka Corp.: Kaneace M-711), a glass fiber reinforcing material blend thermoplastic composition with a 5% thermal reduction temperature of 410°C was obtained by pelletizing in the same manner as in Example 3. Test pieces were produced by performing injection molding in the same manner as in Example 1 and the same tests were performed.

Comparative Example 3

Except for changing the aromatic polycarbonate resin (Teijin Ltd.: Panlite L-1225Y) to 87 parts by weight, changing the methacrylate butadiene styrene copolymer (Kaneka Corp.: Kaneace M-711) to 3 parts by weight, and not adding the acid-modified polyethylene wax (Mitsui Chemicals Inc.: Hi-wax 1105A), a glass fiber reinforcing material blended thermoplastic composition was obtained by pelletizing in the same manner as in Example 1. Test pieces were produced by performing injection molding in the same manner as in Example 1 and the same tests were performed.

Comparative Example 4

Except for not adding the acid-modified polyethylene wax (Mitsui Chemicals Inc.: Hi-wax 1105A), a glass fiber reinforcing material blended thermoplastic composition with a 5% thermal reduction temperature of 433°C was obtained by pelletizing in the same manner as in Example 1. Test pieces were produced by performing injection molding in the same manner as in Example 1 and the same evaluation tests were performed.

Comparative Example 5

Except for changing the aromatic polycarbonate resin (Teijin Ltd.: Panlite L-1225Y) to 89.8 parts by weight and changing the methacrylate butadiene styrene copolymer (Kaneka Corp.: Kaneace M-711) to 0.2 parts by weight, a glass fiber reinforcing material blended thermoplastic composition was obtained by pelletizing in the same manner as in Example 3. Test pieces were produced by performing injection molding in the same manner as in Example 1 and the same evaluation tests were performed.

Comparative Example 6

Except for changing the acrylonitrile butadiene styrene copolymer (Techno Polymer Co., Ltd.: Techno ABS 130, MFR 18) to 0.1 parts by weight, a glass fiber reinforcing material blended thermoplastic composition was obtained by pelletizing in the same manner as in Example 4. Test pieces were produced by performing injection molding in the same manner as in Example 1 and the same evaluation tests were performed.

Comparative Example 7

Except for not adding the acid-modified polyethylene wax (Mitsui Chemicals Inc.: Hi-wax 1105A), a glass fiber reinforcing material blended thermoplastic composition was obtained by pelletizing in the same manner as in Example 4. Test pieces were produced by performing injection molding in the same manner as in Example 1 and the same evaluation tests were performed.

Comparative Example 8

Except for not adding the acid-modified polyethylene wax (Mitsui Chemicals Inc.: Hi-wax 1105A), a glass fiber reinforcing material blended thermoplastic composition was obtained by pelletizing in the same manner as in Example 5. Test pieces were produced by performing injection molding in the same manner as in Example 1 and the same evaluation tests were performed.

Table 2 shows the composition of the inorganic reinforcing material blended molding resin composition and the results of the evaluation tests of the test pieces.

[Table 2]

| Standard | Blend (weight ratio) | | | | | Impact test | Bending test | | Tension test | | | Surface property evaluation | Releasability evaluation | Heat resistance evaluation |
|---|---|---|---|---|---|---|---|---|---|---|---|---|---|---|
| | A PC | B OF | C | D Wax | C/D | Charpy impact strength [kJ/m2] | Modulus of Elasticity [MPa] | Strength [MPa] | Yield strength [MPa] | Breaking strength [MPa] | Stretching [%] | 60 degree gloss @ gate [%] | Releasing stress | 5% thermal reduction temperature [-] |
| Example 1 | 80 | 10 | MBS (C-1) | 10 | 0.5 | 20 | 22.5 | 3150 | 81 | 54 | 0 | 5 | 80 | A | |
| Example 2 | 80 | 10 | MBS (C-1) | 10 | 1 | 10 | 28.6 | 3150 | 79 | 50 | 0 | 10 | 87 | A | |
| Example 3 | 80 | 10 | MBS (C-1) | 10 | 3 | 3 | 36.9 | 3340 | 67 | 44 | 0 | 15 | 85 | A | 3.8 |
| Example 4 | 70 | 10 | ABS (C-2) | 20 | 3 | 7 | 20.2 | 3880 | 93 | 58 | 0 | 10 | 80 | A | |
| Example 5 | 60 | 10 | ABS(C-2) | 30 | 3 | 10 | 19.0 | 3940 | 92 | 56 | 0 | 10 | 82 | A | |
| Example 6 | 60 | 10 | High flow ABS (C-3) | 30 | 3 | 10 | 22.2 | 3770 | 87 | 54 | 0 | 10 | 86 | A | |
| Example 7 | 80 | 10 | MBS (C-1) | 10 | 3 | 3 | 35.8 | 3290 | 68 | 46 | 0 | 15 | 88 | A | 3.2 |
| Example 8 | 85 | 10 | MS (C-6) | 5 | 1.5 | 3 | 25.5 | 3360 | 75 | 58 | 0 | 5 | 80 | A | |
| Example 9 | 85 | 10 | Methacrylate dimethytsiloxane styrene copolymer (C-7) | 5 | 1.5 | 3 | 26.1 | 3290 | 72 | 55 | 0 | 10 | 77 | A | |
| Example 10 | 85 | 10 | MBS (C-1) | 5 | 1.5 | 3 | 23.8 | 3100 | 75 | 50 | 0 | 10 | 90 | A | |
| Example 11 | 80 | 10 | MBS (C-4) | 10 | 3 | 3 | 39.0 | 3140 | 72 | 47 | 0 | 15 | 87 | A | |
| Example 12 | 85 | 10 | MBS (C-4) | 5 | 1.5 | 3 | 24.3 | 3040 | 73 | 49 | 0 | 10 | 91 | A | |
| Example 13 | 80 | 10 | MBS (C-5) | 10 | 3 | 3 | 40.0 | 3280 | 71 | 49 | 0 | 15 | 90 | A | 2.9 |
| Example 14 | 85 | 10 | MBS (C-5) | 5 | 1.5 | 3 | 25.7 | 3180 | 73 | 51 | 0 | 10 | 91 | A | |
| Comparative Example 1 | 90 | 10 | MBS (C-1) | 0 | 0 | 0 | 7.3 | 3600 | 112 | 0 | 79 | 5 | 68 | F | - |
| Comparative Example 2 | 90 | 10 | MBS (C-1) | 0 | 3 | 0 | 25.9 | 4000 | 96 | 60 | 0 | 10 | 63 | B or F | 23.3 |

24

(continued)

| Standard | Blend (weight ratio) | | | | | C/D | Impact test | Bending test | | Tension test | | | Surface property evaluation | Releasability evaluation | Heat resistance evaluation |
|---|---|---|---|---|---|---|---|---|---|---|---|---|---|---|---|
| | A | B | C | | D | | Charpy impact strength | Modulus of Elasticity | Strength | Yield strength | Breaking strength | Stretching | 60 degree gloss @ gate | Releasing stress | 5% thermal reduction temperature |
| | PC | OF | | | Wax | | [kJ/m2] | [MPa] | [MPa] | [MPa] | [MPa] | [%] | [%] | | [-] |
| Comparative Example 3 | 87 | 10 | MBS (C-1) | 3 | 0 | 0 | 12.2 | 3490 | 108 | 0 | 78 | 5 | 74 | F | |
| Comparative Example 4 | 80 | 10 | MBS (C-1) | 10 | 0 | 0 | 14.9 | 3100 | 93 | 0 | 68 | 5 | 84 | F | 4.7 |
| Comparative Example 5 | 89.8 | 10 | MBS (C-1) | 02 | 3 | 0.07 | 30.2 | 3870 | 82 | 57 | 0 | 10 | 65 | B or F | |
| Comparative Example 6 | 70 | 10 | ABS (C-2) | 20 | 0.1 | 200 | 12.0 | 3800 | 120 | 0 | 80 | 5 | 83 | F | |
| Comparative Example 7 | 60 | 10 | ABS (C-2) | 30 | 0 | 0 | 11.6 | 3900 | 124 | 0 | 86 | 5 | 87 | F | |
| Comparative Example 8 | 60 | 10 | High flow ABS (C-3) | 30 | 0 | 0 | 12.8 | 3920 | 117 | 0 | 82 | 5 | 90 | F | |

The resin composition of Comparative Example 1 does not contain either of the functional group-containing olefin polymer (C) and the olefin wax (D). For this reason, the impact resistance (Charpy impact strength) of the molded body is low and the surface glossiness of the molded body is also low. The resin composition of Comparative Example 2 contains the acid-modified polyethylene wax which is the olefin wax (D) but does not contain the functional group-containing olefin polymer (C). Therefore, although the impact resistance (Charpy impact strength) of the molded body is increased, the surface glossiness of the molded body is not improved. Furthermore, the 5% thermal reduction rate is 23.3 which is extremely large and it is understood that the heat resistance of the resin composition is decreased due to the addition of the olefin wax (D). On the other hand, the resin compositions of Comparative Examples 3, 4, 7, and 8 contain a methacrylate butadiene styrene copolymer which is the functional group-containing olefin polymer (C) but do not contain the olefin wax (D). Therefore, although the surface glossiness of the molded body is high, the impact resistance (Charpy impact strength) of the molded body is low. In addition, it is understood that the releasability of the molded body from the mold is poor in all of the Comparative Examples. Furthermore, as shown in the heat resistance evaluation for Comparative Example 4, the 5% thermal reduction rate was 4.7 and the heat resistance of the resin composition was decreased due to the addition of the functional group-containing olefin polymer (C).

In contrast to this, the resin compositions of Examples 1 to 14 contain predetermined amounts of the functional group-containing olefin polymer (C) and the olefin wax (D). As a result, the impact resistance (Charpy impact strength) of the molded body is higher than that of the molded body of Comparative Example 4 and the surface glossiness of the molded body is higher than that of Comparative Example 2. Furthermore, the releasability of the molded body from the mold is good. In addition, the 5% thermal reduction rate of any of Examples 3, 7, and 13 is 3.8 or less and the heat resistance of the resin composition did not easily decrease due to the addition of the functional group-containing olefin polymer (C) or the olefin wax (D).

In addition, Examples 9 to 14 use a masterbatch which includes predetermined amounts of the functional group-containing olefin polymer (C) and the olefin wax (D) and it is understood that the molded body in Example 7 is the same composition as the molded body in Example 3 but that the surface glossiness is improved. The mechanism of the improvement is not limited; however, it is assumed that, by kneading the olefin polymer (C) and the olefin wax (D) beforehand, the compatibility of both improves and, as a result, the bleeding out of the olefin wax (D) during molding is suppressed.

The graph of FIG 1 shows the impact resistance (Charpy impact strength) of the molded body and the surface glossiness of the molded body of Comparative Example 1, Comparative Example 2, Comparative Example 4, and Example 3. As shown in the graph of FIG. 1, it is understood that the impact resistance and the surface glossiness are remarkably improved in the molded body which is obtained from the molding resin composition of the present invention containing predetermined amounts of the functional group-containing olefin polymer (C) and the olefin wax (D).

On the other hand, although the resin compositions of Comparative Examples 5 and 6 contain the functional group-containing olefin polymer (C) and the olefin wax (D), the surface glossiness of the molded body of the resin composition of Comparative Example 5 is not increased since the content ratio of the functional group-containing olefin polymer (C) is low, and the impact resistance of the resin composition of Comparative Example 6 is not increased since the wax content ratio of the olefin wax (D) is low.

In this manner, it is understood that it is possible to realize improvements in the impact resistance and the surface glossiness of the molded product by adjusting the content ratio (C/D) of the functional group-containing olefin polymer (C) and the olefin wax (D).

Industrial Applicability

A molded body which is obtained from a molding resin composition of the present invention has high impact resistance and high surface glossiness. Moreover, the releasability when detaching from the mold is also good. Therefore, the present invention is able to be used as a molded body for a wide range of uses from home products to industrial products.

**Claims**

1. A molding resin composition comprising:

   94 parts by weight to 49 parts by weight of at least one resin (A) selected from the group consisting of a thermoplastic resin and a thermosetting resin;
   5 parts by weight to 50 parts by weight of an inorganic reinforcing material (B);
   1 part by weight to 46 parts by weight of a functional group-containing olefin polymer (C) which has a glass transition temperature Tg of -140°C to 0°C; and

0.01 parts by weight to 10 parts by weight of an olefin wax (D) which has a group containing an element selected from oxygen and nitrogen (where a total of the component (A), the component (B), and the component (C) is 100 parts by weight);

wherein the weight ratio C/D of component (C) to component (D) is 0.1 to 30.

2.  The molding resin composition according to Claim 1,
    wherein the resin (A) is a thermoplastic resin which has a melting point of 200°C or higher and contains an element of groups 15 to 17, a carbon element, and a hydrogen element.

3.  The molding resin composition according to Claim 1 or 2, wherein the resin (A) contains:

    a thermoplastic resin selected from the group consisting of a polycarbonate resin, a thermoplastic polyester resin, a polyacetal resin, a polyamide resin, a polyphenylene oxide resin, and a polyimide resin, or
    a thermosetting resin selected from the group consisting of an epoxy resin, a thermosetting unsaturated polyester resin, and a phenol resin.

4.  The molding resin composition according to Claim 1,
    wherein the inorganic reinforcing material (B) is at least one material selected from a glass fiber and a carbon fiber.

5.  The molding resin composition according to Claim 1,
    wherein the functional group-containing olefin polymer (C) is a copolymer which contains a unit derived from a diene compound and one or more units selected from a unit derived from an aromatic vinyl compound, a unit derived from a cyanated vinyl compound, and a unit derived from an $\alpha,\beta$-unsaturated carboxylate.

6.  The molding resin composition according to Claim 5,
    wherein the unit derived from a diene compound is a unit derived from butadiene and
    the unit derived from an aromatic vinyl compound is a unit derived from styrene.

7.  The molding resin composition according to Claim 1,
    wherein the olefin wax (D) is an olefin wax which is obtained by introducing a substituent group having an element selected from oxygen and nitrogen into an unmodified olefin wax (d) and
    the unmodified olefin wax (d) satisfies the following (i) to (iv):

    (i) a density is 870 kg/m$^3$ to 980 kg/m$^3$,
    (ii) a melting point is 65°C to 165°C,
    (iii) a number-average molecular weight (Mn) is 400 to 10,000, and
    (iv) a ratio (Mw/Mn) of a weight-average molecular weight (Mw) to the number-average molecular weight (Mn) is 1.5 to 5.5.

8.  A method for producing the molding resin composition according to any one of Claims 1 to 7, the method comprising:

    preparing a masterbatch which includes the functional group-containing olefin polymer (C) and the olefin wax (D); and
    melt-kneading the masterbatch, the resin (A), and the inorganic reinforcing material (B).

9.  The method for producing the molding resin composition according to Claim 8,
    wherein a difference between a 5% thermal reduction temperature of the masterbatch according to thermogravimetry and differential thermal analysis (TG-DTA) and the 5% thermal reduction temperature of the functional group-containing olefin polymer (C) or the olefin wax (D) is 20°C or higher.

10. A molded body made of the molding resin composition according to any one of Claims 1 to 7.

FIG. 1

## INTERNATIONAL SEARCH REPORT

| International application No. |
|---|
| PCT/JP2014/003349 |

A. CLASSIFICATION OF SUBJECT MATTER
*C08L101/00*(2006.01)i, *C08J3/22*(2006.01)i, *C08K7/04*(2006.01)i, *C08L9/00*
(2006.01)i, *C08L91/06*(2006.01)i

According to International Patent Classification (IPC) or to both national classification and IPC

B. FIELDS SEARCHED

Minimum documentation searched (classification system followed by classification symbols)
C08L101/00, C08J3/22, C08K7/04, C08L9/00, C08L91/06

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2002-47428 A  (Teijin Chemicals Ltd.),<br>12 February 2002 (12.02.2002),<br>claims; examples<br>(Family: none) | 1-7,10<br>8,9 |
| X<br>A | JP 2002-80708 A  (Teijin Chemicals Ltd.),<br>19 March 2002 (19.03.2002),<br>claims; examples<br>(Family: none) | 1-7,10<br>8,9 |
| X<br>A | JP 2002-80709 A  (Teijin Chemicals Ltd.),<br>19 March 2002 (19.03.2002),<br>claims; examples<br>(Family: none) | 1-7,10<br>8,9 |

[×] Further documents are listed in the continuation of Box C.   [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>27 August, 2014 (27.08.14) | Date of mailing of the international search report<br>09 September, 2014 (09.09.14) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/003349 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 2000-103954 A  (Teijin Chemicals Ltd.),<br>11 April 2000 (11.04.2000),<br>claims; examples<br>(Family: none) | 1-7,10<br>8,9 |
| A | JP 8-82954 A  (Mitsubishi Chemical Corp.),<br>26 March 1996 (26.03.1996),<br>examples<br>(Family: none) | 1-10 |
| A | JP 2000-25369 A  (Teijin Chemicals Ltd.),<br>25 January 2000 (25.01.2000),<br>examples<br>(Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI8188708 B
- JP HEI7238213 B
- JP SHO6212814 B
- JP 2009256655 A
- JP 2009069649 A
- JP 2005097840 PCT

### Non-patent literature cited in the description

- Jitsuyo Purasuchikku Jiten'' (Practical Plastic Encyclopedia. Sangyochosakai Corp,
- *J. Polym. Sci.,* 1970, vol. 8, 1803
- *Makromol. Chem.,* 1976, vol. 177, 213
- *Makromol.Chem.,* 1976, vol. 177, 213